# EUROPEAN PATENT APPLICATION

(11) **EP 4 625 188 A2**
(43) Date of publication of application: **01.10.2025**
(21) Application number: 25189588.4
(22) Date of filing: 26.05.2021
(51) Int. Cl.: G06F 12/14

(54) **KERNEL AND TASK ISOLATION METHOD AND APPARATUS**

(30) Priority: 30.06.2020 CN 202010611828
(62) Divisional of application: 21832844.1
(71) Applicant: Shenzhen Yinwang Intelligent Technologies Co., Ltd., Shenzhen, Guangdong 518110 (CN)
(72) Inventor: TAO, Zhe, Shenzhen, Guangdong 518110 (CN); DENG, Liang, Shenzhen, Guangdong 518110 (CN); CAO, Jianlong, Shenzhen, Guangdong 518110 (CN)
(74) Representative: MERH-IP Matias Erny Reichl Hoffmann Patentanwälte PartG mbB

(57) **Abstract**

Embodiments of this application provide a kernel and task isolation method and an apparatus. A separate trusted base is added to a computer system, and the trusted base is independent of a kernel and a task. The trusted base, the task, and the kernel each have an independent memory, and the task and the kernel cannot access memories of each other. When task scheduling needs to be performed, the trusted base configures a memory protection apparatus based on memory switching configuration information stored in the memory of the trusted base. By configuring the memory protection apparatus, a memory access boundary may be switched from the memory of the kernel to the memory of the task, or may be switched from the memory of the task to the memory of the kernel. Access to the memories of the task and the kernel is implemented through memory boundary switching, so as to ensure safety of the task and the kernel.

## Description

### TECHNICAL FIELD

This application relates to the field of computer technologies, and in particular, to a kernel and task isolation method and an apparatus.

### BACKGROUND

With application and development of new technologies such as electronic technologies, computer technologies, and information technologies, automotive electronic control emerges. The automotive industry has proposed specifications such as the open systems and their interfaces for the electronics in motor vehicles/vehicle distributed executive (open systems and the corresponding interfaces for automotive electronics/vehicle distributed executive, OSEK/VDX), and the automotive open system architecture (automotive open system architecture, AUTOSAR), and formulates unified standards and specifications for vehicle-mounted embedded real-time operating systems and related services, to implement an open development platform for automobile electronics, provide high modularization, portability, and reusability, simplify a development process, and reduce development costs.

OSEK/VDX does not consider safety and reliability of automotive electronics applications. Based on OSEK/VDX, AUTOSAR proposes a series of implementation specifications related to isolation protection, to ensure safety and reliability of automotive electronics applications. Currently, automotive electronics control is mainly performed by an electronic control unit (electronic control unit, ECU). With improvement of a capability of the ECU, AUTOSAR proposes a software partition isolation method for a device having a memory protection unit (memory protection unit, MPU), to divide a storage area of the device into an operating system (operating system, OS) partition and an application partition. Basic software such as a kernel, storage software, a peripheral, and input/output (input/output, I/O) software of an operating system is located in a trusted operating system partition in a privilege mode (privilege mode). Application software is logically divided into a trusted application and a common application. The common application is located in an untrusted application partition in a non-privilege mode (Non-privilege mode). Similar to the kernel of the operating system, the trusted application is located in a trusted operating system partition in a privilege mode. Common applications cannot read or write data in a data segment of each other, cannot execute code in the data segment of each other, and can access a system service only by performing privilege switching by using a system call.

However, in the foregoing method, the trusted application and the kernel can access memories of each other, and the kernel can access a memory of an untrusted application. Consequently, safety of the application and the kernel cannot be ensured.

### SUMMARY

Embodiments of this application provide a kernel and task isolation method and an apparatus, so as to ensure safety of a task and a kernel, and improve system safety.

According to a first aspect, this application provides a kernel and task isolation method. The method is applied to a computer system, an OS and an application run on the computer system, a kernel runs on the OS, the application includes one or more tasks, a trusted base further runs on the OS, and the method includes:

The kernel searches a task preparation queue for a first task. The trusted base searches a memory for first memory switching configuration information of the first task, and configures a memory protection apparatus based on the first memory switching configuration information, where the memory protection apparatus is a hardware component configured to protect a memory of the computer system; and the first memory switching configuration information includes memory address information of the kernel and memory operation permission of the kernel, and memory address information of the first task and memory operation permission of the first task, operation permission of the first task for a memory of the kernel is no permission after the configuration, and operation permission of the kernel for a memory of the first task is readable after the configuration. The kernel calls the first task.

The first memory switching configuration information is used to switch a memory access boundary from the memory of the kernel to the memory of the first task.

The memory operation permission of the kernel includes operation permission of the kernel for the memory of the kernel, operation permission of the kernel for the memory of the task, and operation permission of the kernel for the memory of the trusted base. The memory operation permission of the first task includes operation permission of the first task for the memory of the first task, operation permission of the first task for the memory of the kernel, and operation permission of the first task for the memory of the trusted base. Memory operation permission of the trusted base includes operation permission of the trusted base for the memory of the kernel, operation permission of the trusted base for the memory of the task, and operation permission of the trusted base for the memory of the trusted base.

The operation permission of the kernel for the memory of the kernel includes: operation permission of the kernel for a code segment of the kernel is readable, executable, and unwritable, operation permission of the kernel for a data segment of the kernel is readable, writable, and non-executable, and operation permission of the kernel for a read-only segment of the kernel is read-only, unwritable, and non-executable. That operation permission of the kernel for the first task is no permission means that operation permission of the kernel for each of a data segment, a code segment, and a read-only segment of the first task is no permission. Operation permission of the kernel for the trusted base includes: permission of the kernel for a data segment of the trusted base is no permission, permission of the kernel for a code segment of the trusted base is executable, unreadable, and unwritable, and permission of the kernel for a read-only segment of the trusted base is readable, unwritable, and non-executable.

The operation permission of the first task for the memory of the first task includes: operation permission of the first task for a code segment of the first task is readable, executable, and unwritable, operation permission of the first task for a data segment of the first task is readable, writable, and non-executable, and operation permission of the first task for a read-only segment of the first task is read-only, unwritable, and non-executable. That operation permission of the first task for the kernel is no permission means that operation permission of the first task for each of a data segment, a code segment, and a read-only segment of the kernel is no permission. Operation permission of the first task for the trusted base includes: permission of the first task for a data segment of the trusted base is no permission, permission of the first task for a code segment of the trusted base is executable, unreadable, and unwritable, and permission of the first task for a read-only segment of the trusted base is readable, unwritable, and non-executable.

Operation permission of the trusted base for the first task includes: operation permission of the trusted base for a code segment of the first task is readable, executable, and unwritable, operation permission of the trusted base for a data segment of the first task is readable, writable, and non-executable, and operation permission of the trusted base for a read-only segment of the first task is read-only, unwritable, and non-executable. Operation permission of the trusted base for the kernel includes: operation permission of the trusted base for a code segment of the kernel is readable, executable, and unwritable, operation permission of the trusted base for a data segment of the kernel is readable, writable, and non-executable, and operation permission of the trusted base for a read-only segment of the kernel is read-only, unwritable, and non-executable. The operation permission of the trusted base for the memory of the trusted base includes: permission of the trusted base for a data segment of the trusted base is no permission, permission of the trusted base for a code segment of the trusted base is executable, unreadable, and unwritable, and permission of the trusted base for a read-only segment of the trusted base is readable, unwritable, and non-executable.

It can be learned from the memory operation permission of the kernel, the memory operation permission of the first task, and the memory operation permission of the trusted base that, before the memory access boundary is switched or before the memory protection apparatus is configured, the first task and the kernel cannot access each other, that is, the first task cannot access the memory of the kernel, and the kernel cannot access the memory of the first task. Therefore, in this embodiment of this application, when the first task needs to be called, task boundary switching needs to be first performed, that is, the memory access boundary is switched from the memory of the kernel to the memory of the first task based on the first memory switching configuration information.

Correspondingly, the operation permission of the first task for the memory of the kernel is no permission after the configuration, that is, the permission of the first task for each of the data segment, the code segment, and the read-only segment of the kernel is no permission. Therefore, after the configuration is completed, the first task cannot access the memory of the kernel.

The kernel can access the memory of the first task after the configuration, and correspondingly, access permission of the kernel for the memory of the first task is readable after the configuration. The operation permission of the kernel for the memory of the first task specifically includes: permission of the kernel for the data segment of the first task is readable, writable, and non-executable, permission of the kernel for the code segment of the first task is readable, executable, and unwritable, and permission of the kernel for the read-only segment of the first task is readable, unwritable, and non-executable.

Access permission of each of the task and the kernel for the memory of the trusted base does not change before and after the configuration. For example, the operation permission of the kernel or the first task for the memory of the trusted base includes: permission of the kernel or the first task for a data segment of the trusted base is no permission, permission of the kernel or the first task for a code segment of the trusted base is executable, unreadable, and unwritable, and permission of the kernel or the first task for a read-only segment of the trusted base is readable, unwritable, and non-executable.

The first memory switching configuration information is stored in the read-only segment of the trusted base, and the permission of the first task or the kernel for the read-only segment of the trusted base is readable, unwritable, and non-executable. Based on the memory operation permission of the trusted base, only the trusted base can complete the configuration of the memory protection apparatus, and the kernel cannot configure the memory protection apparatus.

In the conventional technology, when the first task is a task of a common application, the kernel needs to perform privilege switching once, that is, context switching from the kernel to a user. After the privilege switching, the kernel can access a memory of the application, but the application cannot access the memory of the kernel. When the first task is a task of a trusted application, both the first task and the trusted application are located at a privilege layer, and can access memories of each other. Consequently, the method in the conventional technology cannot ensure safety of the kernel and the task. In the method in this embodiment of this application, regardless of whether the first task is a task of a common application or a task of a trusted application, when the memory access boundary is located in the memory of the kernel, if the first task needs to be called, because the kernel and the first task do not have access permission for each other, the trusted base needs to configure the memory protection apparatus based on the first memory switching configuration information of the first task, and switch the memory access boundary by configuring the memory protection apparatus. After the configuration is completed, the permission of the first task for the memory of the kernel is no permission, and the operation permission of the kernel for the memory of the first task is readable, that is, the first task cannot access the memory of the kernel, but the kernel can access the memory of the first task. Therefore, the memory access boundary is switched from the memory of the kernel to the memory of the first task, so as to implement memory isolation between the kernel and the task, and ensure safety of the kernel and the task.

Optionally, before the trusted base searches the memory for the first memory switching configuration information of the first task, the trusted base disables an interrupt. After the trusted base configures the memory protection apparatus based on the first memory switching configuration information, the trusted base enables the interrupt.

In a configuration process of the memory protection apparatus, the trusted base first reads the first memory switching configuration information from the memory to a general-purpose register, and then reads the first memory switching configuration information in the general-purpose register to a register corresponding to the memory protection apparatus. The first memory switching configuration information in the general-purpose register may be modified by an interrupt operation. When the memory switching configuration information in the general-purpose register is modified, data in the memories of the task and the kernel may be leaked. Consequently, safety of the task and the kernel in a system call process cannot be ensured. In this embodiment of this application, the trusted base may enable the interrupt before configuring the memory protection apparatus, and enable the interrupt after configuring the memory protection apparatus. After the interrupt is disabled, the interrupt does not modify a value in the general-purpose register, so that safety of the kernel and the task can be ensured.

The interrupt operation modifies the first memory switching configuration information in the general-purpose register, and a JOP attack or an ROP attack also tampers with the first memory switching configuration information in the general-purpose register. Therefore, in this embodiment of this application, before the kernel calls the first task, the trusted base may further determine whether first memory switching configuration information stored in a register is the same as the first memory switching configuration information stored in the memory, and if the first memory switching configuration information stored in the register is the same as the first memory switching configuration information stored in the memory, determine that the first memory switching configuration information is valid. When the first memory switching configuration information is valid, the trusted base calls the first task, so that the JOP attack or the ROP attack can be prevented, and safety of the kernel and the task can be ensured.

Alternatively, before enabling the interrupt, the trusted base determines whether first memory switching configuration information stored in a register is the same as the first memory switching configuration information stored in the memory, and if the first memory switching configuration information stored in the register is the same as the first memory switching configuration information stored in the memory, the trusted base determines that the first memory switching configuration information is valid. When the first memory switching configuration information is valid, the trusted base enables the interrupt. The method can not only prevent the interrupt from modifying the first memory switching configuration information in the general-purpose register, but also prevent the JOP attack or the ROP attack from modifying the first memory switching configuration information in the general-purpose register.

Optionally, if the first memory switching configuration information stored in the register is different from the first memory switching configuration information stored in the memory, the trusted base determines that the first memory switching configuration information is invalid. When the first memory switching configuration information is invalid, the kernel disables the OS and/or terminates the first task.

Optionally, the OS and all applications are located at a privilege layer. When all the applications are located at the privilege layer, privilege switching does not need to be performed when the common application performs a system call, so as to reduce privilege switching overheads, and improve an application response speed.

Optionally, after the interrupt is enabled, the method further includes:

When receiving an interrupt request, the trusted base queries an interrupt vector table, where the interrupt vector table includes a normal interrupt service function and an interrupt service function of the trusted base.

The trusted base enters the interrupt service function of the trusted base based on the interrupt vector table.

The trusted base obtains a return address of the interrupt, and determines whether the return address of the interrupt belongs to a preset address range.

When the return address of the interrupt belongs to the preset address range, the trusted base determines that the interrupt is an invalid interrupt, and performs resilience protection.

Alternatively, when the return address of the interrupt does not belong to the preset address range, the trusted base determines that the current interrupt is a valid interrupt, and calls the normal interrupt service function.

By setting the interrupt service function of the trusted base, when the interrupt request is received, it is determined whether the interrupt is a valid interrupt, so that an invalid interrupt attack can be avoided, and safety of the kernel and the task can be further improved.

Optionally, the method further includes: The trusted base initializes the interrupt vector table, where the interrupt vector table is stored in a read-only segment of the trusted base. The trusted base initializes the interrupt vector table in a system startup process.

Optionally, the trusted base performs I/O privilege scanning on a code segment of the OS and a code segment of a task in a startup process of the computer system, replaces specific operations in a non-privileged task, a partially privileged task, and a privileged task with exception instructions based on a scanning result, and starts the OS. By replacing the specific operations in the non-privileged task, the partially privileged task, and the privileged task with the exception instructions, access of the kernel to these specific operations is avoided.

Optionally, the specific operation in the non-privileged task includes an IRQ register operation instruction, an I/O status register query instruction, a serial port register operation, a timing register operation, a system register operation, and a memory protection apparatus register operation. The specific operation in the partially privileged task includes a system register operation and a memory protection apparatus register operation. The specific operation in the privileged task includes a memory protection apparatus register operation.

Optionally, the memory protection apparatus is a memory protection unit MPU, the memory address information includes a memory start address and an address length, and the memory start address is a physical address.

Optionally, the memory protection apparatus is a memory management unit MMU, and the memory address information includes a memory start address, an address length, and a table of mapping between a virtual address and a physical address.

According to a second aspect, this application provides a kernel and task isolation method. The method is applied to a computer system, an operating system OS and an application run on the computer, a kernel runs on the OS, the application includes one or more tasks, a trusted base further runs on the OS, and the method includes:

The trusted base stores a task number of a second task when the second task needs to call an application programming interface API of a system service.

The trusted base searches a memory for second memory switching configuration information corresponding to the second task, and configures a memory protection apparatus based on the second memory switching configuration information, where the memory protection apparatus is a hardware component configured to protect a memory of the computer system; and the second memory switching configuration information includes memory address information of the kernel and memory operation permission of the kernel, and memory address information of the second task and memory operation permission of the second task, operation permission of the kernel for a memory of the second task is no permission after the configuration, and operation permission of the second task for a memory of the kernel is readable after the configuration.

The kernel calls the second task.

The kernel calls the system service.

After the system service is completed, the trusted base extracts the task number of the second task, and switches a memory access boundary from the memory of the kernel to the memory of the second task.

The kernel calls the second task to obtain a return result of the system service.

When the second task needs to call the system service, memory boundary switching needs to be performed twice. Before the system call, the memory access boundary is located in the memory of the second task. Therefore, the memory access boundary needs to be first switched from the memory of the second task to the memory of the kernel based on the second memory switching configuration information. After the memory access boundary is switched to the memory of the kernel, the system call may be performed. After the system call is completed, the memory access boundary needs to be switched from the memory of the kernel to the memory of the second task. In this case, the memory access boundary is switched based on the third memory switching configuration information, to switch the memory access boundary back to the memory of the second task. According to the method, in a system call process, memory boundary switching is performed twice to implement the system call, so as to ensure memory isolation between the second task and the kernel.

The second memory switching configuration information is used to switch the memory access boundary from the memory of the second task to the memory of the kernel. Operation permission of the kernel for the memory of the second task is no permission after the configuration, that is, permission of the kernel for each of a data segment, a code segment, and a read-only segment of the second task is no permission, and the kernel cannot access the memory of the second task.

Operation permission of the second task for the memory of the kernel is readable after the configuration, that is, the second task can access the memory of the kernel after the configuration. The operation permission of the second task for the memory of the kernel may include: permission of the second task for a data segment of the kernel is readable, writable, and non-executable, permission of the second task for a code segment of the kernel is readable, executable, and unwritable, and permission of the second task for a read-only segment of the kernel is readable, unwritable, and non-executable.

Optionally, operation permission of the kernel and the second task for the memory of the trusted base does not change before and after the configuration. For example, the operation permission of the kernel or the second task for the memory of the trusted base includes: permission of the kernel or the second task for a data segment of the trusted base is no permission, permission of the kernel or the second task for a code segment of the trusted base is executable, unreadable, and unwritable, and permission of the kernel or the second task for a read-only segment of the trusted base is readable, unwritable, and non-executable. The second memory switching configuration information is stored in the read-only segment of the trusted base.

Optionally, before the trusted base searches the memory for the second memory switching configuration information corresponding to the second task, the trusted base disables an interrupt. After the trusted base configures the memory protection apparatus based on the second memory switching configuration information, the trusted base enables the interrupt.

When second memory switching configuration information in a general-purpose register is modified, data in the memories of the task and the kernel may be leaked. Consequently, safety of the task and the kernel cannot be ensured in a system call process. In this embodiment of this application, the trusted base may enable the interrupt before configuring the memory protection apparatus, and enable the interrupt after configuring the memory protection apparatus. After the interrupt is disabled, the interrupt does not modify a value in the general-purpose register, so that safety of the kernel and the task can be ensured.

Optionally, before the kernel calls the second task, the trusted base determines whether second memory switching configuration information stored in a register is the same as the second memory switching configuration information stored in the memory, and if the second memory switching configuration information stored in the register is the same as the second memory switching configuration information stored in the memory, the trusted base determines that the second memory switching configuration information is valid. When the second memory switching configuration information is valid, the trusted base calls the second task.

Alternatively, before the trusted base enables the interrupt, the trusted base determines whether second memory switching configuration information stored in a register is the same as the second memory switching configuration information stored in the memory, and if the second memory switching configuration information stored in the register is the same as the second memory switching configuration information stored in the memory, the trusted base determines that the second memory switching configuration information is valid. When the second memory switching configuration information is valid, the trusted base enables the interrupt.

The interrupt operation modifies the second memory switching configuration information in the general-purpose register, and a JOP attack or an ROP attack also tampers with the second memory switching configuration information in the general-purpose register. In this embodiment of this application, validity of the second memory switching configuration information is verified, so that the JOP attack or the ROP attack can be prevented, and safety of the kernel and the task can be ensured.

Optionally, if the second memory switching configuration information stored in the register is different from the second memory switching configuration information stored in the memory, the trusted base determines that the second memory switching configuration information is invalid. When the second memory switching configuration information is invalid, the kernel disables the OS and/or terminates the second task.

Optionally, the switching a memory access boundary from the memory of the kernel to the memory of the second task includes:

The trusted base searches the memory for third memory switching configuration information of the second task, and configures the memory protection apparatus based on the third memory switching configuration information, where the third memory switching configuration information includes memory address information of the kernel and memory operation permission of the kernel, and memory address information of the second task and memory operation permission of the second task, operation permission of the second task for a memory of the kernel is no permission after the configuration, and operation permission of the kernel for a memory of the second task is readable after the configuration.

The third memory switching configuration information is used to switch the memory access boundary from the memory of the kernel to the memory of the second task. Operation permission of the second task for the memory of the kernel is no permission after the configuration, that is, permission of the second task for each of a data segment, a code segment, and a read-only segment of the kernel is no permission, and therefore the second task cannot access the memory of the kernel after the configuration is completed.

Permission of the kernel for the memory of the second task is readable after the configuration, that is, the kernel can access the memory of the second task after the configuration. For example, the permission of the kernel for the memory of the second task may include: permission of the kernel for a data segment of the second task is readable, writable, and non-executable, permission of the kernel for a code segment of the second task is readable, executable, and unwritable, and permission of the kernel for a read-only segment of the second task is readable, unwritable, and non-executable.

Access permission of the second task and the kernel for the memory of the trusted base does not change before and after the configuration. For example, the operation permission of the kernel or the second task for the memory of the trusted base includes: permission of the kernel or the second task for a data segment of the trusted base is no permission, permission of the kernel or the second task for a code segment of the trusted base is executable, unreadable, and unwritable, and permission of the kernel or the second task for a read-only segment of the trusted base is readable, unwritable, and non-executable.

Optionally, before the trusted base searches the memory for the third memory switching configuration information of the second task, the trusted base disables an interrupt. After the trusted base configures the memory protection apparatus based on the third memory switching configuration information, the trusted base enables the interrupt.

Optionally, before the kernel calls the second task to obtain the return result of the system service, the trusted base determines whether third memory switching configuration information stored in a register is the same as the third memory switching configuration information stored in the memory, and if the third memory switching configuration information stored in the register is the same as the third memory switching configuration information stored in the memory, the trusted base determines that the third memory switching configuration information is valid. When the third memory switching configuration information is valid, the kernel calls the second task to obtain the return result of the system service.

Alternatively, before enabling the interrupt, the trusted base determines whether third memory switching configuration information stored in a register is the same as the third memory switching configuration information stored in the memory, and if the third memory switching configuration information stored in the register is the same as the third memory switching configuration information stored in the memory, the trusted base determines that the third memory switching configuration information is valid. When the third memory switching configuration information is valid, the trusted base enables the interrupt.

Optionally, the method further includes:

If the third memory switching configuration information stored in the register is different from the third memory switching configuration information stored in the memory, the trusted base determines that the third memory switching configuration information is invalid.

When the third memory switching configuration information is invalid, the kernel disables the OS and/or terminates the second task.

Optionally, the OS and all applications on the computer system are located at a privilege layer.

Optionally, after the interrupt is enabled, the method further includes:

When receiving an interrupt request, the trusted base queries an interrupt vector table, where the interrupt vector table includes a normal interrupt service function and an interrupt service function of the trusted base.

The trusted base enters the interrupt service function of the trusted base based on the interrupt vector table.

The trusted base obtains a return address of the interrupt, and determines whether the return address of the interrupt belongs to a preset address range.

When the return address of the interrupt belongs to the preset address range, the trusted base determines that the interrupt is an invalid interrupt, and performs resilience protection.

Alternatively, when the return address of the interrupt does not belong to the preset address range, the trusted base determines that the interrupt is a valid interrupt, and calls the normal interrupt service function.

Optionally, the method further includes: The trusted base initializes the interrupt vector table, where the interrupt vector table is stored in a read-only segment of the trusted base.

Optionally, the trusted base performs I/O privilege scanning on a code segment of the OS and a code segment of a task in a startup process of the computer system, replaces specific operations in a non-privileged task, a partially privileged task, and a privileged task with exception instructions based on a scanning result, and starts the OS.

Optionally, the specific operation in the non-privileged task includes an IRQ register operation instruction, an I/O status register query instruction, a serial port register operation, a timing register operation, a system register operation, and a memory protection apparatus register operation.

The specific operation in the partially privileged task includes a system register operation and a memory protection apparatus register operation.

The specific operation in the privileged task includes a memory protection apparatus register operation.

According to a third aspect, this application provides a computer system. An operating system OS and an application run on the computer system, a kernel runs on the OS, the application includes one or more tasks, and a trusted base further runs on the OS.

The kernel is configured to search a task preparation queue for a first task.

The trusted base is configured to: search a memory for first memory switching configuration information of the first task, and configure a memory protection apparatus based on the first memory switching configuration information, where the memory protection apparatus is a hardware component configured to protect a memory of the computer system; and the first memory switching configuration information includes memory address information of the kernel and memory operation permission of the kernel, and memory address information of the first task and memory operation permission of the first task, operation permission of the first task for a memory of the kernel is no permission after the configuration, and operation permission of the kernel for a memory of the first task is readable after the configuration.

The kernel is further configured to call the first task.

Optionally, the trusted base is further configured to: before searching the memory for the first memory switching configuration information of the first task, disable an interrupt; and after configuring the memory protection apparatus based on the first memory switching configuration information, enable the interrupt.

Optionally, the trusted base is further configured to: determine whether first memory switching configuration information stored in a register is the same as the first memory switching configuration information stored in the memory; and if the first memory switching configuration information stored in the register is the same as the first memory switching configuration information stored in the memory, determine that the first memory switching configuration information is valid. The kernel is further configured to: when the first memory switching configuration information is valid, call the first task.

Optionally, the trusted base is further configured to: if the first memory switching configuration information stored in the register is different from the first memory switching configuration information stored in the memory, determine that the first memory switching configuration information is invalid.

The kernel is further configured to: when the first memory switching configuration information is invalid, disable the OS and/or terminate the first task.

Optionally, the OS and all applications on the computer system are located at a privilege layer.

Optionally, after the trusted base enables the interrupt, the trusted base is further configured to: when receiving an interrupt request, query an interrupt vector table, where the interrupt vector table includes a normal interrupt service function and an interrupt service function of the trusted base; enter the interrupt service function of the trusted base based on the interrupt vector table; obtain a return address of the interrupt, and determine whether the return address of the interrupt belongs to a preset address range; and when the return address of the interrupt belongs to the preset address range, determine that the current interrupt is an invalid interrupt, and perform resilience protection; or when the return address of the interrupt does not belong to the preset address range, determine that the current interrupt is a valid interrupt, and call the normal interrupt service function.

Optionally, the trusted base is further configured to initialize the interrupt vector table, where the interrupt vector table is stored in a read-only segment of the trusted base.

Optionally, the trusted base is further configured to: perform input/output I/O privilege scanning on a code segment of the kernel and a code segment of a task in a startup process of the computer system; replace specific operations in a non-privileged task, a partially privileged task, and a privileged task with exception instructions based on a scanning result; and start the OS.

Optionally, the specific operation in the non-privileged task includes an IRQ register operation instruction, an I/O status register query instruction, a serial port register operation, a timing register operation, a system register operation, and a memory protection apparatus register operation. The specific operation in the partially privileged task includes a system register operation and a memory protection apparatus register operation. The specific operation in the privileged task includes a memory protection apparatus register operation.

According to a fourth aspect, this application provides a computer system. An operating system OS and an application run on the computer system, a kernel runs on the OS, the application includes one or more tasks, and a trusted base further runs on the OS.

The trusted base is configured to store a task number of a second task when the second task needs to call an application programming interface API of a system service.

The trusted base is further configured to: search a memory for second memory switching configuration information of the second task, and configure a memory protection apparatus based on the second memory switching configuration information, where the memory protection apparatus is a hardware component configured to protect a memory of the computer system; and the second memory switching configuration information includes memory address information of the kernel and memory operation permission of the kernel, and memory address information of the second task and memory operation permission of the second task, operation permission of the kernel for a memory of the second task is no permission after the configuration, and operation permission of the second task for a memory of the kernel is readable after the configuration.

The kernel is configured to call the second task and the system service.

The trusted base is further configured to: after the system service is completed, extract the task number of the second task, and switch a memory access boundary from the memory of the kernel to the memory of the second task.

The kernel is further configured to call the second task to obtain a return result of the system service.

Optionally, the trusted base is further configured to: before searching the memory for the second memory switching configuration information corresponding to the second task, disable an interrupt; and after configuring the memory protection apparatus based on the second memory switching configuration information, enable the interrupt.

Optionally, the trusted base is further configured to: determine whether second memory switching configuration information stored in a register is the same as the second memory switching configuration information stored in the memory; and if the second memory switching configuration information stored in the register is the same as the second memory switching configuration information stored in the memory, determine that the second memory switching configuration information is valid. The kernel is further configured to: when the second memory switching configuration information is valid, call the second task.

Optionally, the trusted base is further configured to: if the second memory switching configuration information stored in the register is different from the second memory switching configuration information stored in the memory, determine that the second memory switching configuration information is invalid.

The kernel is further configured to: when the second memory switching configuration information is invalid, disable the OS and/or terminate the second task.

Optionally, the switching, by the trusted base, a memory access boundary from the memory of the kernel to the memory of the second task includes: searching the memory for third memory switching configuration information of the second task, and configuring the memory protection apparatus based on the third memory switching configuration information, where the third memory switching configuration information includes memory address information of the kernel and memory operation permission of the kernel, and memory address information of the second task and memory operation permission of the second task, operation permission of the second task for a memory of the kernel is no permission after the configuration, and operation permission of the kernel for a memory of the second task is readable after the configuration.

Optionally, the trusted base is further configured to: before searching the memory for the third memory switching configuration information of the second task, disable an interrupt; and after configuring the memory protection apparatus based on the third memory switching configuration information, enable the interrupt.

Optionally, the trusted base is further configured to: determine whether third memory switching configuration information stored in a register is the same as the third memory switching configuration information stored in the memory; and if the third memory switching configuration information stored in the register is the same as the third memory switching configuration information stored in the memory, determine that the third memory switching configuration information is valid. The kernel is further configured to: when the third memory switching configuration information is valid, call the second task to obtain the return result of the system service.

Optionally, the trusted base is further configured to: if the third memory switching configuration information stored in the register is different from the third memory switching configuration information stored in the memory, determine that the third memory switching configuration information is invalid.

The kernel is further configured to: when the third memory switching configuration information is invalid, disable the OS and/or terminate the second task.

Optionally, the OS and all applications on the computer system are located at a privilege layer.

Optionally, after enabling the interrupt, the trusted base is further configured to:
when receiving an interrupt request, query an interrupt vector table, where the interrupt vector table includes a normal interrupt service function and an interrupt service function of the trusted base;
enter the interrupt service function of the trusted base based on the interrupt vector table;
obtain a return address of the interrupt, and determine whether the return address of the interrupt belongs to a preset address range; and
when the return address of the interrupt belongs to the preset address range, determine that the interrupt is an invalid interrupt, and perform resilience protection; or
when the return address of the interrupt does not belong to the preset address range, determine that the interrupt is a valid interrupt, and call the normal interrupt service function.

Optionally, the trusted base is further configured to initialize the interrupt vector table, where the interrupt vector table is stored in a read-only segment of the trusted base.

Optionally, the trusted base is further configured to: perform I/O privilege scanning on a code segment of the OS and a code segment of a task in a startup process of the computer system; replace specific operations in a non-privileged task, a partially privileged task, and a privileged task with exception instructions based on a scanning result; and
start the OS.

Optionally, the specific operation in the non-privileged task includes an IRQ register operation instruction, an I/O status register query instruction, a serial port register operation, a timing register operation, a system register operation, and a memory protection apparatus register operation.

The specific operation in the partially privileged task includes a system register operation and a memory protection apparatus register operation.

The specific operation in the privileged task includes a memory protection apparatus register operation.

According to a fifth aspect, this application provides a computer system, including a processor, a memory, and a memory protection apparatus. The memory includes a memory, an operating system OS and an application run on the processor, a kernel runs on the OS, the application includes one or more tasks, a trusted base further runs on the OS, the memory is configured to store instructions, and the processor is configured to execute the instructions stored in the memory, so that the processor performs the method in any one of the first aspect or the optional manners of the first aspect in this application.

According to a sixth aspect, this application provides a computer system, including a processor, a memory, and a memory protection apparatus. The memory includes a memory, an operating system OS and an application run on the processor, a kernel runs on the OS, the application includes one or more tasks, a trusted base further runs on the OS, the memory is configured to store instructions, and the processor is configured to execute the instructions stored in the memory, so that the processor performs the method in any one of the second aspect or the optional manners of the second aspect in this application.

For technical effects corresponding to the computer systems, refer to the technical effects corresponding to the methods provided in the first aspect and the second aspect. Details are not described herein again.

Embodiments of this application provide a kernel and task isolation method and an apparatus. A separate trusted base is added to a computer system, and the trusted base is independent of a kernel and a task. The trusted base, the task, and the kernel each have an independent memory, and the task and the kernel cannot access memories of each other. When task scheduling needs to be performed, the trusted base configures a memory protection apparatus based on memory switching configuration information stored in the memory of the trusted base. By configuring the memory protection apparatus, a memory access boundary may be switched from the memory of the kernel to the memory of the task, or may be switched from the memory of the task to the memory of the kernel. Access to the memories of the task and the kernel is implemented through memory boundary switching, so as to ensure safety of the task and the kernel.

### BRIEF DESCRIPTION OF DRAWINGS

FIG. 1 is a schematic diagram of an architecture of a computer system to which an embodiment of this application is applicable;
FIG. 2 is a schematic diagram of an architecture of a software partition in an existing AUTOSAR OS;
FIG. 3 is a schematic diagram of an architecture of a new software partition to which this application is applicable;
FIG. 4 is a schematic diagram of functional modules of a trusted base;
FIG. 5 is a flowchart of a kernel and task isolation method according to Embodiment 1 of this application;
FIG. 6 is a schematic diagram of a memory boundary access table according to this application;
FIG. 7 is a flowchart of a kernel and task isolation method according to Embodiment 2 of this application;
FIG. 8 is a flowchart of a kernel and task isolation method according to Embodiment 3 of this application;
FIG. 9A and FIG. 9B are a flowchart of a kernel and task isolation method according to Embodiment 4 of this application;
FIG. 10 is a flowchart of a kernel and task isolation method according to Embodiment 5 of this application;
FIG. 11 is a flowchart of a kernel and task isolation method according to Embodiment 6 of this application;
FIG. 12 is a schematic diagram of hardware and software architectures of a vehicle-mounted device to which an embodiment is applicable;
FIG. 13 is a schematic flowchart of feeding back collision detection by an airbag system;
FIG. 14 is a schematic diagram of a structure of a computer system according to Embodiment 8 of this application;
FIG. 15 is a schematic diagram of a structure of a computer system according to Embodiment 9 of this application; and
FIG. 16 is a schematic diagram of a structure of a computer system according to Embodiment 10 of this application.

### DESCRIPTION OF EMBODIMENTS

Embodiments of this application provide a kernel and task (task) isolation method. The method may be applied to a computer system that uses an automotive open system architecture (automotive open system architecture, AUTOSAR) standard. The computer system may be deployed on a vehicle, or may be deployed at a place far away from the vehicle to perform wireless communication with the vehicle, for example, deployed on a server that is communicatively connected to the vehicle. The computer system deployed on the vehicle may be referred to as a vehicle-mounted device. The vehicle may be specifically a car, a truck, a motorcycle, a bus, a boat, an airplane, a helicopter, a lawn mower, a recreational vehicle, a playground vehicle, a construction device, a tram, a golf cart, a train, a handcart, or the like. This is not specifically limited in embodiments of the present invention.

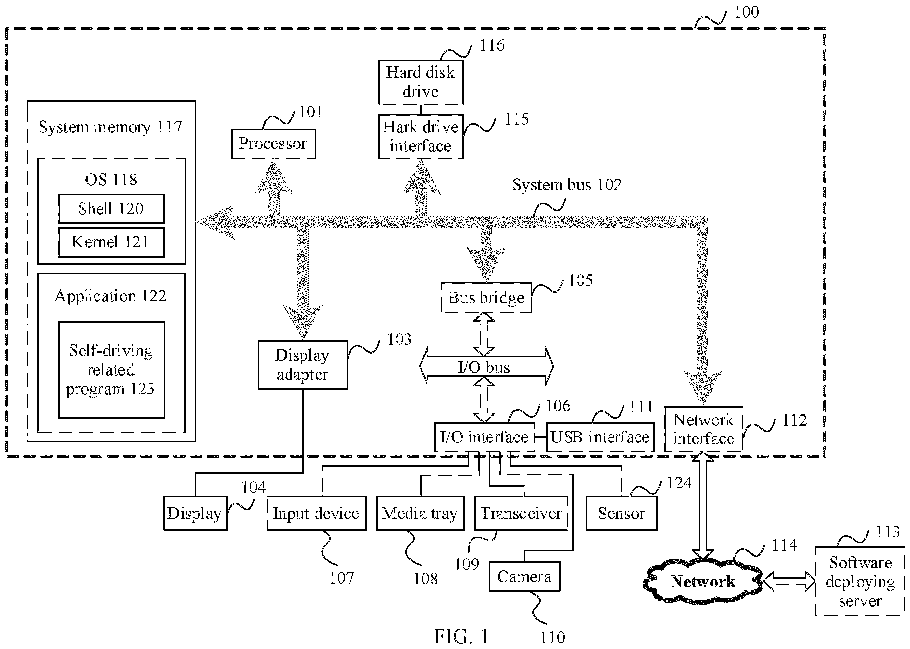

FIG. 1 is a schematic diagram of an architecture of a computer system to which an embodiment of this application is applicable. As shown in FIG. 1, the computer system 100 includes a processor 101, and the processor 101 is coupled to a system bus 102. The processor 101 may be one or more processors, and each processor may include one or more processor cores. The computer system 100 further includes a display adapter (video adapter) 103, the display adapter may drive a display 104, and the display 104 is coupled to the system bus 102. The system bus 102 is coupled to an input/output (I/O) bus through a bus bridge 105. An I/O interface 106 is coupled to the I/O bus. The I/O interface 106 communicates with a plurality of I/O devices, for example, an input device 107 (such as a keyboard, a mouse, or a touchscreen), a media tray (media tray) 108 (such as a CD-ROM or a multimedia interface), a transceiver 109 (which may send and/or receive a radio communication signal), a camera 110 (which may capture static and dynamic digital video images), and an external USB interface 111. Optionally, an interface connected to the I/O interface 106 may be a USB interface.

The processor 101 may be any conventional processor, including a reduced instruction set computing (reduced instruction set computing, RISC) processor, a complex instruction set computing (complex instruction set computing, CISC) processor, or a combination thereof. Optionally, the processor may be a dedicated apparatus such as an application-specific integrated circuit (application-specific integrated circuit, ASIC). Optionally, the processor 101 may be a neural-network processing unit or a combination of the neural-network processing unit and the conventional processor.

Optionally, in various embodiments of this application, the computer system 100 may be located at a place far away from a self-driving vehicle, and can wirelessly communicate with the self-driving vehicle. In other aspects, some of processes described in this application are performed by a processor disposed inside the self-driving vehicle, and the other processes are performed by a remote processor, including taking actions required to perform a single operation.

The computer system 100 may communicate with a software deploying server 113 through a network interface 112. The network interface 112 is a hardware network interface such as a network adapter. A network 114 may be an external network such as the internet, or may be an internal network such as the Ethernet or a virtual private network (VPN). Optionally, the network 114 may alternatively be a wireless network such as a Wi-Fi network or a cellular network.

A hard drive interface 115 is coupled to the system bus 102. A hardware drive interface 115 is connected to a hard disk drive 116. A system memory 117 is coupled to the system bus 102. Data running in the system memory 117 may include an operating system 118 and an application 119 of the computer system 100.

The operating system 118 includes a shell (Shell) 120 and a kernel (kernel) 121. The shell 120 is an interface between a user and the kernel (kernel) of the operating system. The shell is an outermost layer of the operating system. The shell manages interaction between the user and the operating system: waiting for input of the user, interpreting the input of the user for the operating system, and processing various output results of the operating system.

The kernel 121 includes parts in the operating system that are configured to manage a memory, a file, a peripheral, and a system resource. When directly interacting with hardware, the kernel of the operating system usually runs a process, provides inter-process communication, and provides CPU time slice management, interrupt, memory management, IO management, and the like.

The application 122 includes a program 123 related to control of a self-driving car, for example, a program for managing interaction between the self-driving car and an obstacle on a road, a program for controlling a route or a speed of the self-driving car, and a program for controlling interaction between the self-driving car and another self-driving car on a road. The application 122 may exist on a system of the software deploying server (deploying server) 113. In an embodiment, when the application 122 needs to be executed, the computer system 100 may download the application 122 from the software deploying server 113.

A sensor 124 is associated with the computer system 100. The sensor 124 is configured to detect an ambient environment of the computer system 100. For example, the sensor 124 may detect an animal, a car, an obstacle, and a crosswalk. Further, the sensor may detect ambient environments of objects such as the animal, the car, the obstacle, and the crosswalk, for example, the ambient environment of the animal, such as another animal that appears around the animal, a weather condition, and brightness of the ambient environment. Optionally, if the computer system 100 is located on the self-driving car, the sensor may be a camera, an infrared sensor, a chemical detector, a microphone, or the like.

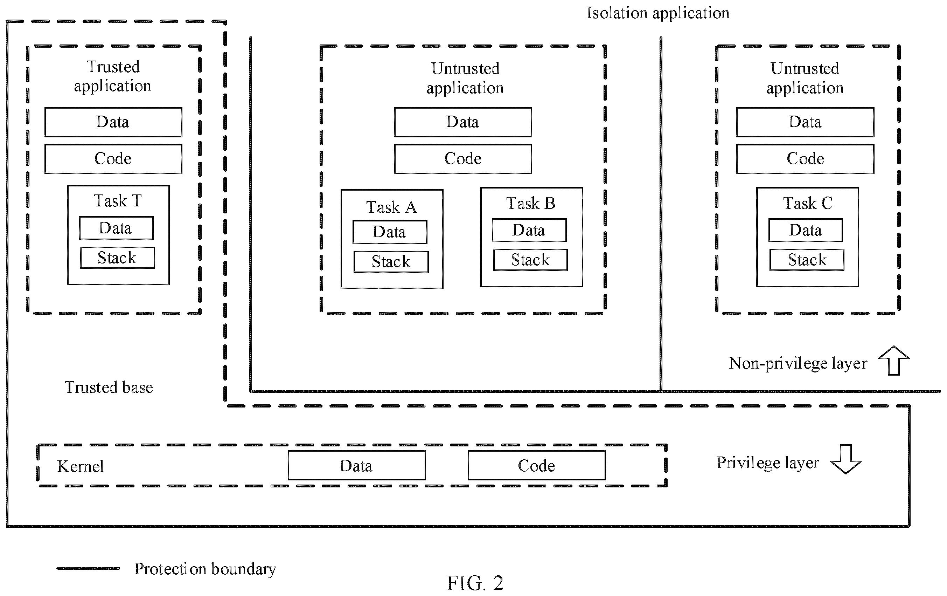

In the conventional technology, for a vehicle-mounted device having an MPU capability, an AUTOSAR OS proposes a software partition isolation method. FIG. 2 is a schematic diagram of an architecture of a software partition in an existing AUTOSAR OS. As shown in FIG. 2, in the OS, a kernel (Kernel) and a trusted application are in a privilege mode (or referred to as a privilege layer), and a common application (or referred to as a non-trusted application (non-trusted application)) is in a non-privilege mode (or referred to as a non-privilege layer or a user mode (User Mode)). In addition, basic software such as storage software, a peripheral, and I/O is also in a privilege mode, which is not shown in FIG. 2.

In an ARM system, a working mode of a processor includes the following seven modes: a user mode, a system mode, a general interrupt mode, a fast interrupt mode, a management mode, an abort mode, and an undefined instruction mode. The modes other than the user mode are privilege modes.

The mode of the processor may be understood as a current working state of the processor. For example, if the current operating system is executing a user program, the current working mode of the CPU is the user mode. In this case, if data arrives on the network adapter, an interrupt signal is generated, and the processor automatically switches to the general interrupt mode to process the data of the network adapter, and after processing the data of the network adapter, returns the data of the network adapter to the user mode to continue to execute the user program.

The user mode is a working mode of a user program, and runs in a user mode of the operating system. The user mode has no permission to operate another hardware resource but can only process data of the user mode, or cannot switch to another mode. To access a hardware resource or switch to another mode, the user mode can only use a soft interrupt or generate an exception.

In the privilege mode, the working mode of the processor can be switched freely. An internal register and some on-chip peripherals in ARM can be accessed only in the privilege mode in terms of a hardware design (optional).

As shown in FIG. 2, data of the kernel includes data (data, also referred to as a data segment (data segment)) and code (code, also referred to as a code segment (code segment)), data of the application (including the common application and the trusted application) includes data, code, and one or more tasks, and data of each task includes data and a stack (stack). An application occupies a specific memory. A data segment is usually a memory area used to store an initialized global variable in a program. A code segment is usually a memory area used to store program execution code. A stack segment is usually a memory area working in a stack manner. When the program is executed, the program may add an execution state to the top of the stack. When the program ends, the program needs to pop (pop) up the state data at the top of the stack. A heap (heap) is used to store a memory segment that is dynamically allocated during process running. A size of the heap is not fixed and can be dynamically expanded or reduced. The stack (stack) is a local variable temporarily created by a user to store a program. In addition, when a function is called, a parameter of the function is also pushed into a stack that initiates the call. After the call ends, a return value of the function is also stored in the stack. Because of a first-in-last-out feature of the stack, the stack is easily used to store/restore the call. In this sense, the stack may be considered as a memory area for storing and exchanging temporary data. The stack segment may alternatively belong to the data segment.

In the conventional technology, common applications cannot read and write data in a data segment of each other, and cannot execute a program in the data segment of each other. The common application can access a system service only after performing privilege switching by using a system call. Both the trusted application and the kernel are located at the privilege layer. Therefore, the trusted application can directly access data and a service of the kernel. Therefore, the trusted application and the kernel form a trusted computing base (Trusted Computing Base, TCB) of AUTOSAR.

An MPU is a hardware resource commonly used in an embedded system for memory protection. The embedded system uses multi-task operation and control. The system needs to provide a mechanism to ensure that a running task does not damage an operation of another task, that is, to prevent unauthorized access to system resources and some other tasks.

The MPU uses a region (region) or a protected region (protected region) to manage address space of a memory. The region is an attribute associated with the address space of the memory. There are usually eight regions in the MPU, which are numbered from 0 to 7. A size and a start address of the region may be stored in a register c6 of a coprocessor CP15. The size of the region may be any power of 2 from 4 KB to 4 GB, and the start address of the region needs to be a multiple of the size of the region.

The operating system may configure access permission for the region of the MPU, and the operating system may set the access permission for the region to readable, read-only, inaccessible, or the like based on the current working mode of the processor.

When the processor accesses a region of the memory, the MPU compares an access permission attribute of the region with the current working mode of the processor. If an access request of the processor meets the access permission of the region, the MPU allows the kernel to read and write the memory. If the access request of the processor does not meet the access permission of the domain, an exception signal is generated.

In the embedded system, a memory management unit (memory management unit, MMU) can provide a more powerful memory protection mechanism than the MPU. The MPU usually provides only memory protection, but the MMU may further provide a function such as mapping from a virtual address to a physical address in addition to memory protection.

Most machines that use the MMU use a paging mechanism. The operating system may set access permission for each page table in the page table. Some page tables cannot be accessed, some page tables can be accessed only in the privilege mode, and some page tables can be accessed in both the user mode and the privilege mode. In addition, the access permission is classified into three types: readable, writable, and executable. After the setting, when the processor needs to access a virtual address (virtual address, VA), the MMU checks whether the processor is currently in the user mode or the privilege mode and whether the processor is intended to read data, write data, or fetch instructions by accessing the memory. If the permission is the same as that set in the operating system, the access is allowed and the VA is converted into a physical address (physical address, PA). Otherwise, the access is not allowed and an exception (exception) is generated.

A mechanism for processing an exception is similar to that for processing an interrupt. The difference lies in that the interrupt is generated by an external device (such as a hardware error and an input error), but the exception is generated by the processor. Generation of the interrupt is irrelevant to an instruction currently executed by the processor, but the exception is caused by an error of the instruction currently executed by the processor.

In a normal case, the processor executes the user program (for example, the untrusted application in FIG. 1) in the user mode. In a case of an interrupt or an exception, the processor switches to the privilege mode to execute a kernel program. After processing the interrupt or the exception, the processor returns to the user mode to continue to execute the user program. Generally, the operating system divides virtual address space into user space and kernel space. For example, virtual address space of a Linux system on an x86 platform ranges from 0x0000 0000 to 0xffff ffff, where the first 3G space is user space, and the last 1G space is kernel space. The user program is loaded to the user space, and the kernel program is loaded to the kernel space. The user program cannot access data in the kernel or jump to the kernel space for execution. In this way, the kernel can be protected. If a process accesses an invalid address, the process may crash, but stability of the kernel and the system is not affected. When an interrupt or an exception occurs in the system, the system not only jumps to an interrupt service function or an exception service function for execution, but also switches from the user mode to the privilege mode for execution by jumping to kernel code from an interrupt service program or an exception service program.

The trusted computing base is also referred to as a trusted base, and is a set of all safety protection mechanisms for implementing safety protection on a computer system. The safety protection mechanism may appear in a form of hardware, firmware, and software. Once a program error or a safety risk occurs in a component of the trusted computing base, safety of the entire system is compromised. On the contrary, if a problem occurs in a part other than the trusted computing base, only related permission granted by a system safety policy is leaked. The permission is generally low. Therefore, reducing the trusted computing base is critical to overall safety of the system.

System call (system call): Main functions of an operating system are to manage hardware resources and provide a good environment for an application developer to make an application have better compatibility. To achieve these objectives, a kernel provides a series of multi-kernel functions with preset functions, which are presented to a user through a group of interfaces referred to as system calls. The system call is used to send a request of the application to the kernel, call a corresponding kernel function to complete required processing, and return a processing result to the application.

In the architecture shown in FIG. 2, the common application runs at the non-privilege layer. When processing operations such as task scheduling, a system service request, and I/O access, the common application needs to perform privilege switching, to switch from the non-privilege mode to the privilege mode. However, privilege switching takes a relatively long time. For example, when the common application requests, from the kernel, a service that needs to run with higher permission, for example, privilege I/O (privilege I/O) access and inter-process communication, the common application cannot directly access the system service, but needs to perform privilege switching by using a system call.

Instructions of the processor are classified into common instructions and privilege instructions. The privilege instructions can be executed only by the kernel, and only the common instructions can be executed in the user mode. I/O access of the computer system includes privilege I/O access and common I/O (normal I/O) access. Privilege I/O is I/O that can be accessed only by the kernel, and common I/O can be accessed only by the application. When a task in an application needs to access the privilege I/O, the privilege I/O can be accessed only by using a system call.

Specifically, when a user task in a common application initiates a system service request to a system call handler (syscall handler), the following behavior occurs: The processor generates a synchronization exception (Trap), refreshes a pipeline (pipeline), stores a CPU register of the user task, reads an exception vector table, and switches an MPU protected region. Each system call needs to undergo context switching from the user task to the kernel. Then, the syscall handler calls an application programming interface (application programming interface, API) of a system service. After completing the user task, the syscall handler further needs to undergo context switching from the kernel to the user task. The context switching from the user task to the kernel or the context switching from the kernel to the user task is privilege switching.

In a system call process, context switching (or privilege switching) needs to be performed twice, and clock overheads of each context switching are about at least 300 instruction cycles (cycles). Memory allocation, I/O access, and mutually exclusive resources are common operations in a task. However, the resource or I/O belongs to the privilege layer and therefore can be accessed only by using a system call. However, because memory allocation, I/O access, and the like frequently occur in the system, privilege switching overheads of the common application are excessively high. Excessive privilege switching overheads cause delayed application response, which may cause incorrect transmission or abnormal task scheduling.

In the vehicle-mounted device, autonomous emergency braking (autonomous emergency braking, AEB) is an active safety technology, which uses a device such as a radar or a camera to detect a road ahead. When a distance is less than a safety distance, emergency braking is performed. Therefore, AEB has high requirements on real-time performance and system response.

In addition, in the partitioning architecture shown in FIG. 1, the trusted application and the kernel form the trusted base. When a quantity of trusted applications is excessively large, the trusted base also has a safety risk due to the excessively large quantity of trusted applications. Once vulnerabilities in a trusted task or the kernel are exploited, user data and kernel data may be completely exposed, which poses a safety risk.

Safety threats to an automotive electronic system include remote intrusion and a physical contact attack. For a vehicle entertainment system with safety vulnerabilities, vulnerability exploitation only causes user privacy leakage and does not cause personal safety loss. For a steering auxiliary system, if safety vulnerabilities exist, personal safety risks may occur after remote control is cracked.

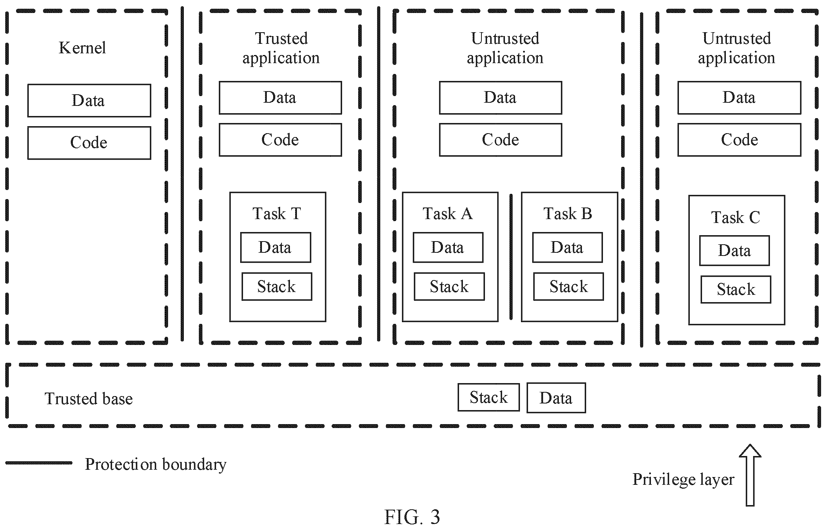

It can be learned that, in the vehicle-mounted device, real-time performance and safety are critical. To meet real-time performance and safety requirements of the vehicle-mounted device, an embodiment of this application provides a new partitioning architecture. FIG. 3 is a schematic diagram of an architecture of a new software partition to which this application is applicable. As shown in FIG. 3, in the new partitioning architecture, a common application is divided into a privilege layer, that is, both an OS and an application (including the common application and the trusted application in the conventional technology) are located at the privilege layer. Because both the common application and a kernel are located at the privilege layer, task scheduling, a system service request, and the like in the common application do not require privilege switching overheads, so as to improve an application response speed.

Different from the conventional technology, a trusted base is further added to the new partitioning architecture.

However, in consideration of safety of the vehicle-mounted device, memory isolation between the kernel and a task needs to be ensured. The memory isolation means that the task and the kernel cannot randomly access a memory of each other. In this embodiment of this application, a trusted protection unit is added, and the trusted protection unit is used as a trusted base. As shown in FIG. 3, the trusted base is independent of the kernel and the task. In the partitioning architecture shown in FIG. 2, the trusted application and the kernel jointly form the trusted base. Therefore, the trusted base in this embodiment of this application is different from the trusted base in the conventional technology.

The trusted base is configured to process memory isolation, and the trusted protection unit is also referred to as a protected environment keystone for MCU (Protected Environment Keystone for MCU, PEKM). The trusted base is equivalent to an API gateway, and implements a connection between the task and the kernel. In this embodiment of this application, the trusted base needs to perform memory boundary switching and authentication on all system calls and task scheduling, so as to ensure safety of the task and the kernel at the privilege layer.

It may be understood that memory space that can be accessed by a processor of the vehicle-mounted device in different working modes is limited, and a range of the memory space that can be accessed by the processor in different working modes is referred to as a memory boundary. For example, memory space that can be accessed by the processor in a privilege mode is different from that can be accessed in a user mode. After the working mode of the processor is switched from the privilege mode to the user mode, the memory space that can be accessed by the processor also changes, and the change of the memory space accessed by the processor is referred to as memory boundary switching.

Optionally, the trusted base may be implemented by software. The entire trusted base (that is, the entire software that implements the trusted base) is used as a trusted base of the vehicle-mounted device. A memory of the trusted base stores MPU configuration information or MMU configuration information, and memory isolation is mainly implemented by using the MPU configuration information and the MMU configuration information. Therefore, the trusted base of the vehicle-mounted device mainly includes the MPU configuration information or the MMU configuration information. Compared with the conventional technology in which the trusted protection base of the vehicle-mounted device includes the kernel and the trusted application, the trusted base is reduced, and system safety is improved.

In the partitioning architecture shown in FIG. 3, there is a protection boundary (or referred to as a memory protection boundary) between a kernel and a trusted application, between a kernel and an untrusted application, between a trusted application and a trusted application, between different tasks of a same trusted application, and between different tasks of a same untrusted application. The protection boundary is the memory boundary mentioned above. When memory to be accessed by a task exceeds a memory boundary allocated by the trusted base to the task, a memory exception occurs. In this embodiment of this application, after the memory exception occurs, the trusted base implements memory boundary switching.

In this embodiment of this application, a main protection mechanism of the vehicle-mounted device is implemented by using the MPU configuration information or the MMU configuration information, and the trusted base may be protected through sensitive instruction elimination (instruction elimination), post verification (post verification), permission protection, or the like.

Sensitive instruction elimination means using a compiler technology to eliminate original system instructions for accessing an MPU register or an MMU register in the kernel (or OS) and the task, and perform W⊕X protection on a code segment and a data segment. Herein, ⊕ indicates an exclusive OR operation, and W⊕X protection is data execution prevention (data execution prevention, DEP). Only the trusted base has the system instructions for accessing the MPU or the MMU.

Permission protection means configuring memory switching configuration information and an interrupt vector table that are included in the trusted base as read-only, and configuring the code segment of the trusted base as executable and unwritable. The memory switching configuration information is used to switch a memory access boundary from a memory of the kernel to a memory of the task, or from a memory of the task to a memory of the kernel.

Post verification: To prevent a routing information protocol (routing information protocol, RIP) attack, the trusted base verifies whether the memory switching configuration information is valid. The verification process is first post verification. If the memory switching configuration information is invalid, resilience protection is triggered, for example, system restart, system shutdown, or service termination. For an interrupt request, to prevent an interrupt from occurring after an MPU or an MMU is configured, post verification for the first time may be bypassed. In this embodiment of this application, post verification for the second time may be further performed. The post verification for the second time is to perform verification on the interrupt request, and check whether a return address of an interrupt handler function is valid.

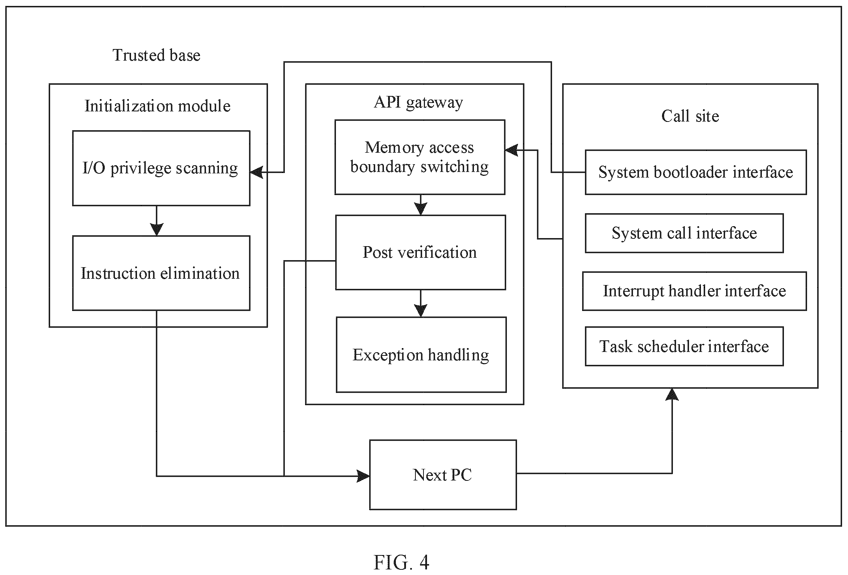

FIG. 4 is a schematic diagram of functional modules of a trusted base. As shown in FIG. 4, the trusted base includes a call site, an API gateway, and an initialization module. The call site is a service entry between the trusted base and a kernel, and between the trusted base and a task. After running to the call site, a program counter (program counter, PC) calls an interface provided by the trusted base. The interface includes a system bootloader (system bootloader) interface, a system call interface, an interrupt handler (Interrupt handler) interface, and a task scheduler (schedule) interface. The initialization module is configured to: process a system initialization event, and initialize I/O privilege control in a system startup process, including I/O privilege scanning (privilege scanner) and instruction elimination. The API gateway provides the following functions: memory access boundary switching, post verification, and exception handling (exception handler). The API gateway is used to process a system call, an interrupt service function, and a task scheduling event. When the task or the kernel needs to switch a memory access boundary to access a resource or a service, the API gateway switches the memory access boundary by configuring the MPU or the MMU. The API gateway configures the MPU or the MMU based on configuration information stored in a memory of the trusted base, and performs verification (that is, post verification) on validity of the configuration information. When the verification succeeds, a next instruction of the task or the kernel is returned.

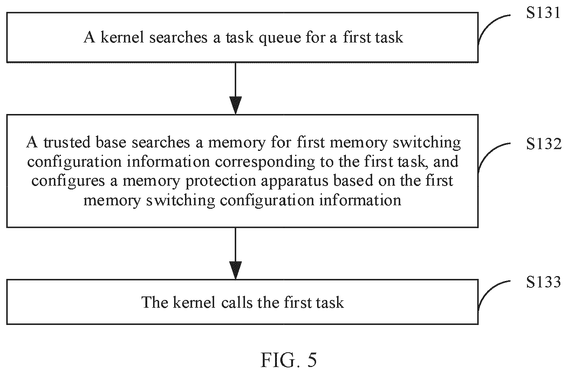

FIG. 5 is a flowchart of a kernel and task isolation method according to Embodiment 1 of this application. The method in this embodiment is performed by a computer system, an OS and an application run on the computer system, a kernel runs on the OS, one application includes one or more tasks, and a trusted base further runs on the OS. As shown in FIG. 5, the method provided in this embodiment includes the following steps.

S131: The kernel searches a task queue for a first task.

An AUTOSAR OS is a static task allocation system. A task may be started periodically or aperiodically based on a scheduling table. When a current task (that is, a currently scheduled task) is switched from a running state to a preparation state, a scheduler (Scheduler or OS Scheduler) runs. The scheduler is configured to perform task scheduling. The scheduler stores the current task, stores context information of the task, and finds the to-be-run first task from the task queue according to a scheduling policy.

The scheduler may schedule a task in the task queue based on priorities between tasks. The first task may be a current task, or may not be a current task. When the current task is a task with a highest priority in the task queue, the first task is a current task. When the current task is not a task with a highest priority in the task queue, the first task is not a current task, but a task whose priority is higher than that of the current task. It may be understood that the foregoing description is merely an example, and the task in the task queue may be scheduled in another manner.

S132: The trusted base searches a memory for first memory switching configuration information corresponding to the first task, and configures a memory protection apparatus based on the first memory switching configuration information.

In this embodiment, the memory protection apparatus is a hardware component configured to protect a memory of the computer system, and may be an MPU or an MMU. The first memory switching configuration information is used to switch a memory access boundary from a memory of the kernel to a memory of the first task.

The first memory switching configuration information includes memory address information of the kernel and memory operation permission of the kernel, and memory address information of the first task and memory operation permission of the first task. The memory operation permission of the kernel is no permission after the configuration, and the permission of the first task is readable after the configuration. The first memory switching configuration information may further include memory address information and memory operation permission of the trusted base.

In this embodiment, the memory operation permission of each of the kernel, the task, and the trusted base includes permission of a data segment (or referred to as a data segment memory), a code segment (or referred to as a code segment memory), and a read-only (read-only) segment (or referred to as a read-only segment memory). The data segment memory is a memory occupied by the data segment, the code segment memory is a memory occupied by the code segment, and the read-only segment memory is a memory occupied by the read-only segment.

Operation permission of the first task for the memory of the kernel is no permission after the configuration, that is, permission of the first task for each of the data segment, the code segment, and the read-only segment of the kernel is no permission. Therefore, after the configuration is completed, the first task cannot access the memory of the kernel.

The kernel can access the memory of the first task after the configuration, and correspondingly, access permission of the kernel for the memory of the first task is readable after the configuration. Operation permission of the kernel for the memory of the first task specifically includes: permission of the kernel for the data segment of the first task is readable, writable, and non-executable, permission of the kernel for the code segment of the first task is readable, executable, and unwritable, and permission of the kernel for the read-only segment of the first task is readable, unwritable, and non-executable.

Access permission of each of the task and the kernel for the memory of the trusted base does not change before and after the configuration. For example, operation permission of the kernel or the first task for the memory of the trusted base includes: permission of the kernel or the first task for the data segment of the trusted base is no permission, permission of the kernel or the first task for the code segment of the trusted base is executable, unreadable, and unwritable, and permission of the kernel or the first task for the read-only segment of the trusted base is readable, unwritable, and non-executable.

The permission of each of the data segment, the code segment, and the readable segment includes three types of permission: read, write, and execute. When the permission of each of the data segment, the code segment, and the readable segment is described, the three types of permission may be described separately, or the permission of each of the data segment, the code segment, and the readable segment may be described in a negative manner. For example, when the permission of the data segment of the first task is readable, writable, and non-executable, if the negative manner is used for description, the permission of the data segment of the first task is non-executable. When the permission of the code segment of the first task is readable, executable, and unwritable, if the negative manner is used for description, the permission of the code segment of the first task is unwritable. When the permission of the read-only segment of the first task is readable, unwritable, and non-executable, if the negative manner is used for description, the permission of the read-only segment of the first task is unwritable and non-executable.

The trusted base reads the first memory switching configuration information from the memory (which is specifically the memory of the trusted base), reads the first memory switching configuration information to a general-purpose register, reads the first memory switching configuration information in the general-purpose register to a register of the memory protection apparatus, and configures a protected region of the memory protection apparatus based on the first memory switching configuration information in the register of the memory protection apparatus. After the protected region of the memory protection apparatus is configured, the first task can access only a memory address in the protected region. When the accessed memory address exceeds the protected region, a memory access exception occurs, so as to implement memory isolation.

In this embodiment of this application, before the trusted base configures the memory protection apparatus, the memory access boundary is located in the memory of the kernel. In this case, if the first task needs to be called, because the kernel and the first task do not have access permission for each other, the memory of the first task cannot be accessed. Therefore, switching of the memory access boundary needs to be performed first. After the memory protection apparatus is configured, the permission of the first task for each of the data segment, the code segment, and the read-only segment of the kernel is no permission, and the operation permission of the kernel for the memory of the first task is readable. Therefore, after the configuration is completed, the first task cannot access the memory of the kernel, but the kernel can access the memory of the first task, so as to switch the memory access boundary from the memory of the kernel to the memory of the first task.

Before the memory boundary switching, the permission of the kernel for each of the data segment, the code segment, and the read-only segment of the first task is no permission. Permission of the kernel for the data segment of the kernel is readable, writable, and non-executable, permission of the kernel for the code segment of the kernel is readable, executable, and unwritable, and permission of the kernel for the read-only segment of the kernel is readable, unwritable, and non-executable. The permission of the kernel for the data segment of the trusted base is no permission, the permission of the kernel for the code segment of the trusted base is executable, unreadable, and unwritable, and the permission of the kernel for the read-only segment of the trusted base is readable, unwritable, and non-executable. Therefore, before the memory boundary switching, the kernel cannot access the memory of the first task, and a working mode of a processor is a privilege mode. After the memory boundary is switched from the memory of the kernel to the memory of the first task, the first task cannot access the memory of the kernel, and the working mode of the processor is a user mode.

The memory address information of each of the kernel, the first task, and the trusted base may be a memory start address and an address length, or may be a start address and an end address. The memory operation permission may be unreadable, unwritable, non-executable, and the like. When the memory protection apparatus is the MPU, memory addresses of the kernel, the first task, and the trusted base each are a physical address. When the memory protection apparatus is the MMU, memory addresses of the kernel, the first task, and the trusted base each are a physical address, a virtual address, or a table of mapping between a virtual address and a physical address.

In this embodiment of this application, there are two types of memory switching configuration information. One type of memory switching configuration information is used to switch the memory access boundary from the memory of the kernel to the memory of the task, and the other type of memory switching configuration information is used to switch the memory access boundary from the memory of the task to the memory of the kernel. Both the two types of memory switching configuration information are stored in the memory of the trusted base. Specifically, the memory switching configuration information is stored in the read-only segment of the trusted base, and operation permission of the read-only segment of the trusted base is configured as read-only, that is, a read-only segment of a trusted protection unit cannot be written or executed.

In this embodiment of this application, only the trusted base can read the memory switching configuration information, and execute the memory switching configuration information to configure the MPU or the MMU, so as to complete memory boundary switching. However, the kernel cannot execute the memory switching configuration information, and cannot configure the MPU or the MMU. In the conventional technology, the MPU or the MMU is configured by the kernel.

Optionally, the first memory switching configuration information may be stored in the memory of the trusted base in a form of a table. For example, the first memory switching configuration information is stored in a memory boundary access table. The memory boundary access table may be statically generated or preconfigured. The memory boundary access table includes a plurality of task-to-kernel switching tables and a plurality of kernel-to-task switching tables. The task-to-kernel switching table is used to switch the memory access boundary from the memory of the kernel to the memory of the task, and switch the memory access boundary from the memory of the task to the memory of the kernel.

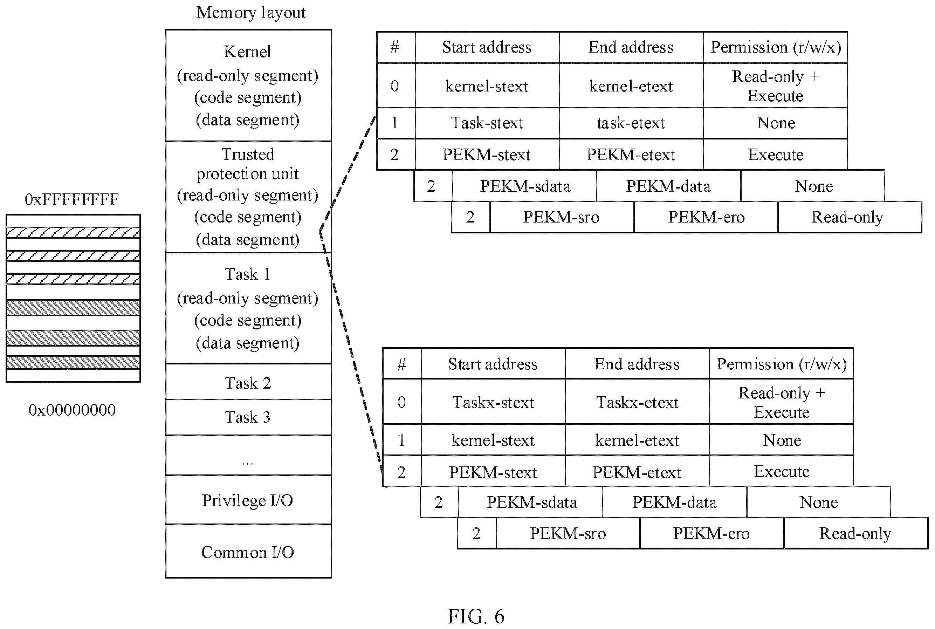

FIG. 6 is a schematic diagram of a memory boundary access table according to this application. As shown in FIG. 6, a memory address range on an MCU is 0X00000000 to 0XFFFFFFFF. A layout of the memory address range is shown in FIG. 6. The memory address range is divided into a memory of a kernel, a memory of a trusted base, memories of a task 1 to a task n, a memory of privileged I/O, and a memory of common I/O. The memory of the kernel, the memory of the trusted base, and the memory of the task each include a data segment memory, a code segment memory, and a read-only segment memory, and the memory of the task (including a read-only segment, a code segment, and a data segment) is arranged in continuous address space.

It may be understood that address space of each of the memory of the kernel, the memory of the trusted base, the memory of the task, the memory of the privilege I/O, and the memory of the common I/O may be continuous or discontinuous. FIG. 6 is merely a schematic diagram, and does not constitute a limitation on memory division.

As shown in FIG. 6, each task may correspond to three task-to-kernel switching tables. A first task-to-kernel switching table includes a start address, an end address, and permission of the code segment memory of each of the kernel, the task, and the trusted base, a second task-to-kernel switching table includes a start address, an end address, and permission of the data segment memory of each of the kernel, the task, and the trusted base, and a third task-to-kernel switching table includes a start address, an end address, and permission of the read-only segment memory of each of the kernel, the task, and the trusted base. Certainly, the content of the three task-to-kernel switching tables may alternatively be stored in one table. This is not limited in this embodiment.

In FIG. 6, in the task-to-kernel table, a line 0 represents the start address (Kernel_stext), the end address (Kernel_etext), and the permission of the code segment of the kernel, a line 1 represents the start address (Task_stext), the end address (Task_etext), and the permission of the code segment of the task, and a line 2 represents the start address (PEKM_stext), the end address (PEKM_etext), and the permission of the code segment of the trusted base. Similarly, in FIG. 6, (Kernel/Task/PEKM_sdata) represents the start address of the data segment of the kernel/task/trusted base, (Kernel/Task/PEKM_edata) represents the end address of the data segment of the kernel/task/trusted base, (Kernel/Task/PEKM_sro) represents the start address of the read-only segment of the kernel/task/trusted base, and (Kernel/Task/PEKM_ero) represents the end address of the read-only segment of the kernel/task/trusted base.

Similarly, each task further corresponds to three kernel-to-task switching tables. A first kernel-to-task switching table includes a start address, an end address, and permission of the code segment memory of each of the task, the kernel, and the trusted base, a second kernel-to-task switching table includes a start address, an end address, and permission of the data segment memory of each of the task, the kernel, and the trusted base, and a third kernel-to-task switching table includes a start address, an end address, and permission of the read-only segment memory of each of the task, the kernel, and the trusted base.

S133: The kernel calls the first task.

After the memory access boundary is switched from the memory of the kernel to the memory of the first task, the first task cannot access the memory of the kernel, the memory of the first task can be accessed by the kernel, and the kernel calls the first task. In this case, the working mode of the processor is the user mode, and the first task can access only the memory of the first task and cannot access the memory of the kernel in the user mode.

It should be noted that the method in this embodiment is applicable to a scenario in which a common application is located at a non-privilege layer, and a kernel and a trusted application are located at a privilege layer, and a scenario in which all applications are located at a privilege layer, that is, a common application is also located at the privilege layer. Compared with the former scenario, the latter scenario can improve system performance, that is, improve an application response speed. When all the applications are located at the privilege layer, privilege switching does not need to be performed when the common application performs a system call, so as to reduce privilege switching overheads, and improve an application response speed.

In addition, in this embodiment, the trusted base mainly includes MPU configuration information or MMU configuration information. Compared with the conventional technology in which a trusted base includes both a kernel and a trusted application, the trusted base is reduced, and system safety is improved.

In this embodiment, the trusted base is independent of the kernel and the task. During task scheduling, the trusted base searches the memory for the first memory switching configuration information of the first task, and configures the memory protection apparatus based on the first memory switching configuration information, where the first memory switching configuration information includes the memory address information and the operation permission of the kernel, and the memory address information and the operation permission of the first task, the memory operation permission of the kernel is no permission after the configuration, and the permission of the first task is readable after the configuration. After the memory protection unit is configured, because the memory operation permission of the kernel is no permission, that is, the first task cannot access the memory of the kernel, safety of the task and the kernel is ensured.

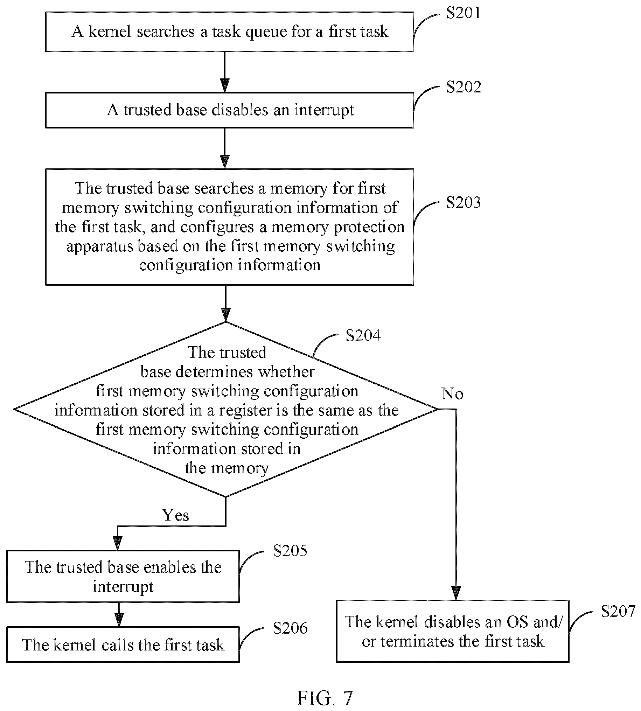

FIG. 7 is a flowchart of a kernel and task isolation method according to Embodiment 2 of this application. Based on Embodiment 1, in this embodiment, a trusted base disables an interrupt before configuring a memory protection apparatus, and enables the interrupt after configuring the memory protection apparatus, so as to prevent an interrupt operation from tampering with first memory switching configuration information in a register. Further, before the interrupt is enabled, post verification may be performed once, that is, whether the first memory switching configuration information is valid is verified, and the interrupt is enabled only when the first memory switching configuration information is valid. After the post verification succeeds, a flow control attack such as a jump-oriented programming (Jump-oriented Programming, JOP) attack or a return-oriented programming (Return-Oriented Programming, ROP) attack can be prevented.

S201: A kernel searches a task queue for a first task.

S202: The trusted base disables an interrupt.

Before the memory protection apparatus is configured, the interrupt is disabled, so that the interrupt can be prevented from modifying first memory switching configuration information stored in a general-purpose register. If the interrupt is not disabled, the interrupt may modify the first memory switching configuration information stored in the general-purpose register. If the first memory switching configuration information stored in the general-purpose register is modified, an error occurs in the memory protection apparatus subsequently.

S203: The trusted base searches a memory for first memory switching configuration information of the first task, and configures a memory protection apparatus based on the first memory switching configuration information.

The first memory switching configuration information includes memory protection apparatus configuration information of the kernel, that of the first task, and that of the trusted base. The memory protection apparatus configuration information of the kernel includes memory address information of the kernel and memory operation permission of the kernel. The memory protection apparatus configuration information of the first task includes memory address information of the first task and memory operation permission of the first task. The memory protection apparatus configuration information of the trusted base includes memory address information of the trusted base and memory operation permission of the trusted base.

The trusted base first loads the memory protection apparatus configuration information of the kernel, that of the first task, and that of the trusted base from memories to general-purpose registers respectively. For example, the trusted base loads the memory protection apparatus configuration information of the kernel, that of the first task, and that of the trusted base to general-purpose registers r0, r1, and r2 respectively. Herein, r0=table[kernel], r1=table[task1 ID], and r2=table[PEKM], where "=" represents an assignment operation, table[kernel] represents the memory protection apparatus configuration information of the kernel that is stored in the memory, table[task1 ID] represents the memory protection apparatus configuration information of the first task that is stored in the memory, and [PEKM] represents the memory protection apparatus configuration information of the trusted base that is stored in the memory.

The trusted base reads the memory protection apparatus configuration information of the kernel, that of the first task, and that of the trusted base that are stored in the general-purpose registers r0, r1, and r2 to a register of the memory protection apparatus, where the register of the memory protection apparatus is a dedicated register. Then, the trusted base configures a protected region of the memory protection apparatus based on the memory protection apparatus configuration information of the kernel, that of the first task, and that of the trusted base that are stored in the register of the memory protection apparatus. The protected region of the memory protection apparatus may be configured in the following manner: region[0]=r0, region[1]=r1, and region[2]=r2, where region[0], region[1], and region[2] respectively represent protected regions of the memory protection apparatus, that is, access permission of memory space of the kernel, that of the first task, and that of the trusted base are set based on the configuration information in the general-purpose registers r0, r1, and r2. Memory boundary switching is completed by configuring the memory protection apparatus.

S204: The trusted base determines whether first memory switching configuration information stored in a register is the same as the first memory switching configuration information stored in the memory.

It may be understood that the first memory switching configuration information stored in the memory is read-only and cannot be tampered with, and the first memory switching configuration information stored in the general-purpose register may be tampered with by an interrupt, a JOP attack, or an ROP attack. Therefore, in this embodiment, before enabling the interrupt, the trusted base first determines whether the first memory switching configuration information stored in the memory is the same as the first memory switching configuration information stored in the general-purpose register. If yes, it indicates that the first memory switching configuration information in the general-purpose register is not tampered with, and the trusted base enables the interrupt. If no, it indicates that the first memory switching configuration information in the general-purpose register is tampered with, and the trusted base disables the OS or terminates the first task. This can prevent an interrupt or a control flow attack such as an ROP attack or a JOP attack from modifying the first memory switching configuration information.

After configuring the memory protection apparatus, the trusted base performs step S203, and step S203 is an optional step. For example, the trusted base reads the first memory switching configuration information from the memory to general-purpose registers r3, r4, and r5, where r3 is used to store the memory protection apparatus configuration information of the kernel, r4 is used to store the memory protection apparatus configuration information of the first task, and r5 is used to store the memory protection apparatus configuration information of the trusted base.

The memory protection apparatus configuration information of the kernel, that of the first task, and that of the trusted base that are stored in the general-purpose registers r0, r1, and r2 may be modified by an interrupt, an ROP attack, a JOP attack, or the like, and values in the general-purpose registers r3, r4, and r5 are values that are just read from the memory and that are not modified. Therefore, the trusted base compares values of r0 and r3, compares values of r1 and r4, and compare values of r2 and r5. If the values of the three groups of general-purpose registers are the same, it indicates that the first memory switching configuration information is not modified.

For example, the foregoing comparison process may be represented in the following manner: cmp(table[kernel], r0), cmp(table[task1], r1), and cmp(table[PEKM], r2), where cmp represents a comparison operation, table[kernel/task1/PEKM] represents the memory protection apparatus configuration information of the kernel, that of the first task, and that of the trusted base that are stored in the memory, and r0, r1, and r2 represent the memory protection apparatus configuration information of the kernel, that of the first task, and that of the trusted base that are stored in the general-purpose registers.

When the first memory switching configuration information stored in the general-purpose register is the same as the first memory switching configuration information stored in the memory, it indicates that the first memory switching configuration information is valid, that is, the first memory switching configuration information in the general-purpose register is not tampered with. In this case, step S205 is performed. When the first memory switching configuration information stored in the general-purpose register is different from the first memory switching configuration information stored in the memory, it indicates that the first memory switching configuration information is invalid, that is, the first memory switching configuration information in the general-purpose register is tampered with. In this case, step S207 is performed.

S205: The trusted base enables the interrupt.

S206: The kernel calls the first task.

S207: The kernel disables the OS and/or terminates the first task.

When the first memory switching configuration information is invalid, step S207 is performed.

In this embodiment, the trusted base disables the interrupt before searching the memory for the first memory switching configuration information of the first task, and enables the interrupt after configuring the memory protection apparatus based on the first memory switching configuration information, so as to prevent the interrupt from modifying the first memory switching configuration information stored in the general-purpose register. Optionally, before the trusted protection enables the interrupt, the trusted base determines whether the first memory switching configuration information stored in the register is the same as the first memory switching configuration information stored in the memory. If the first memory switching configuration information stored in the register is the same as the first memory switching configuration information stored in the memory, the trusted base enables the interrupt. If the first memory switching configuration information stored in the memory is the same as that stored in the register, it indicates that the first memory switching configuration information in the register is not tampered with by an attack such as an ROP attack or a JOP attack. After the memory switching configuration information in the register is modified, data in the memories of the task and the kernel may be leaked. Consequently, safety of the task and the kernel cannot be ensured. In this embodiment, if the first memory switching configuration information stored in the memory is different from that stored in the register, the trusted base disables the OS and/or terminates the first task, so that safety of the task and the memory can be ensured.

It may be understood that disabling the interrupt operation before the memory protection apparatus is configured, and performing post verification may be implemented through decoupling. That is, in a possible embodiment, the trusted base may disable the interrupt operation before configuring the memory protection apparatus, and enable the interrupt after configuring the memory protection apparatus. Before enabling the interrupt, the trusted base does not determine whether the memory switching configuration information stored in the memory is the same as the memory switching configuration information stored in the register. In another possible embodiment, the trusted base may not disable the interrupt operation before configuring the memory protection apparatus, and before calling the service, determine whether the memory switching configuration information stored in the memory is the same as the memory switching configuration information stored in the register.

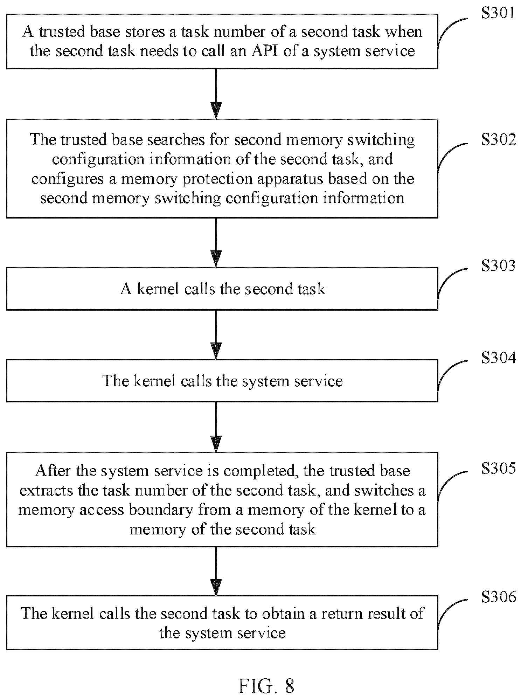

FIG. 8 is a flowchart of a kernel and task isolation method according to Embodiment 3 of this application. The method in this embodiment is performed by a computer system, an OS and an application run on the computer system, a kernel runs on the OS, an application includes one or more tasks, and a trusted base further runs on the OS. This embodiment is described by using an example in which the trusted base performs memory boundary switching in a system call process. It may be understood that the method in this embodiment may be performed independently of the method in Embodiment 1, or may be performed before or after the method in Embodiment 1. This is not limited in this embodiment. As shown in FIG. 8, the method provided in this embodiment includes the following steps.

S301: The trusted base stores a task number (task ID) of a second task when the second task needs to call an API of a system service.

The task number of the second task is used to uniquely indicate a task. When the second task needs to call the system service, the second task sends a service ID (service ID) to the trusted base as a system service number of a system service request.

The second task is different from a first task, the second task is a task that needs to perform system call, and the first task is a task that performs common function call. To perform system call, the second task needs to switch a working state of a processor from a user state to a kernel state, so that the system call can be performed. However, the first task is always in the user state in a process of performing common function call.

S302: The trusted base searches for second memory switching configuration information of the second task, and configures a memory protection apparatus based on the second memory switching configuration information.

The memory protection apparatus is a hardware component configured to protect a memory of the computer system, and may be an MMU or an MPU. To perform system call, the second task needs to switch the working state of the processor from the user state to the kernel state. Therefore, the processor in the kernel state can access a memory of the kernel. In the current state, a memory access boundary is located in a memory of the second task. Therefore, in this embodiment, the memory access boundary needs to be switched from the memory of the second task to the memory of the kernel.

The second memory switching configuration information is used to switch the memory access boundary from the memory of the second task to the memory of the kernel. The second memory switching configuration information includes memory address information of the kernel and memory operation permission of the kernel, and memory address information of the second task and memory operation permission of the second task. Operation permission of the kernel for the memory of the second task is no permission after the configuration, and operation permission of the second task for the memory of the kernel is readable after the configuration.

The operation permission of the kernel for the memory of the second task is no permission after the configuration, that is, permission of the kernel for each of a data segment, a code segment, and a read-only segment of the second task is no permission, and the kernel cannot access the memory of the second task.

Operation permission of the second task for the memory of the kernel is readable after the configuration, that is, the second task can access the memory of the kernel after the configuration. The operation permission of the second task for the memory of the kernel may include: permission of the second task for a data segment of the kernel is readable, writable, and non-executable, permission of the second task for a code segment of the kernel is readable, executable, and unwritable, and permission of the second task for a read-only segment of the kernel is readable, unwritable, and non-executable.

Optionally, operation permission of the kernel and the second task for the memory of the trusted base does not change before and after the configuration. For example, the operation permission of the kernel or the second task for the memory of the trusted base includes: permission of the kernel or the second task for a data segment of the trusted base is no permission, permission of the kernel or the second task for a code segment of the trusted base is executable, unreadable, and unwritable, and permission of the kernel or the second task for a read-only segment of the trusted base is readable, unwritable, and non-executable. The second memory switching configuration information is stored in a read-only segment of the trusted base.

It can be learned from the foregoing description that both the second memory switching configuration information and first memory switching configuration information include: memory address information and memory access permission of the kernel, memory address information and memory access permission of the task, and memory address information and memory access permission of the trusted base. However, specific values of the two pieces of memory address information and the two pieces of memory access permission in the two pieces of configuration information are different. The second memory switching configuration information may be stored in the memory of the trusted base in a table form, for example, stored in a memory boundary access table shown in FIG. 6, and specifically stored in a task-to-kernel table. For a specific implementation of the second memory switching configuration information, refer to the description of the first memory switching configuration information in Embodiment 1. Details are not described herein again.

After the memory protection apparatus is configured, the permission of each of the data segment, the code segment, and the read-only segment of the second task is no permission. In this case, the memory of the second task cannot be accessed by the kernel or another task, and the memory of the kernel can be accessed by the second task, so that the system call can be performed.

S303: The kernel calls the second task.

After the memory protection apparatus is configured based on the second memory switching configuration information, the memory access boundary is switched successfully, that is, the memory access boundary is switched from the memory of the second task to the memory of the kernel.

S304: The kernel calls the system service.

After the memory protection apparatus is configured based on the second memory switching configuration information, the memory access boundary is switched successfully, that is, the memory access boundary is switched from the memory of the second task to the memory of the kernel. In this case, the kernel can call the second task and the system service. For example, the kernel finds the system service based on the service ID.

S305: After the system service is completed, the trusted base extracts the task number of the second task, and switches the memory access boundary from the memory of the kernel to the memory of the second task.

The system call needs to perform memory boundary switching twice, that is, the memory boundary is switched from the memory of the second task to the memory of the kernel, and after the system service is completed, the memory boundary further needs to be switched from the memory of the kernel to the memory of the second task.

After the system service is completed, the kernel calls a call site of the trusted base to obtain the stored task number.

For example, the trusted base may switch the memory access boundary from the memory of the kernel to the memory of the second task in the following manner: The trusted base searches the memory for third memory switching configuration information of the second task, and configures the memory protection apparatus based on the third memory switching configuration information.

The third memory switching configuration information is used to switch the memory access boundary from the memory of the kernel to the memory of the second task. The third memory switching configuration information includes memory address information of the kernel and memory operation permission of the kernel, and memory address information of the second task and memory operation permission of the second task, operation permission of the second task for a memory of the kernel is no permission after the configuration, and operation permission of the kernel for a memory of the second task is readable after the configuration.

The operation permission of the second task for the memory of the kernel is no permission after the configuration, that is, permission of the second task for each of a data segment, a code segment, and a read-only segment of the kernel is no permission. Therefore, after the configuration is completed, the second task cannot access the memory of the kernel.

Permission of the kernel for the memory of the second task is readable after the configuration, that is, the kernel can access the memory of the second task after the configuration. For example, the permission of the kernel for the memory of the second task may include: permission of the kernel for a data segment of the second task is readable, writable, and non-executable, permission of the kernel for a code segment of the second task is readable, executable, and unwritable, and permission of the kernel for a read-only segment of the second task is readable, unwritable, and non-executable.

Access permission of the second task and the kernel for the memory of the trusted base does not change before and after the configuration. For example, the operation permission of the kernel or the second task for the memory of the trusted base includes: permission of the kernel or the second task for a data segment of the trusted base is no permission, permission of the kernel or the second task for a code segment of the trusted base is executable, unreadable, and unwritable, and permission of the kernel or the second task for a read-only segment of the trusted base is readable, unwritable, and non-executable.

Optionally, the third memory switching configuration information may further include memory address information and memory operation permission of the trusted base. In the third memory switching configuration information, permission of a data segment of the trusted base is no permission, permission of a code segment of the trusted base is executable, unreadable, and unwritable, and permission of a read-only segment of the trusted base is readable, unwritable, and non-executable.

A function of the third memory switching configuration information is the same as that of the first memory switching configuration information in Embodiment 1, and both the third memory switching configuration information and the first memory switching configuration information are used to switch the memory access boundary from the memory of the kernel to the memory of the task. For specific descriptions of the third memory switching configuration information, refer to the descriptions of the first memory switching configuration information in Embodiment 1. Details are not described herein again.

S306: The kernel calls the second task to obtain a return result of the system service.

In this embodiment, when the second task needs to call the system service, memory boundary switching needs to be performed twice. Before the system call, the memory access boundary is located in the memory of the second task. Therefore, the memory access boundary needs to be first switched from the memory of the second task to the memory of the kernel based on the second memory switching configuration information. After the memory access boundary is switched to the memory of the kernel, the system call may be performed. After the system call is completed, the memory access boundary needs to be switched from the memory of the kernel to the memory of the second task. In this case, the memory access boundary is switched based on the third memory switching configuration information, to switch the memory access boundary back to the memory of the second task. According to the method, in a system call process, memory boundary switching is performed twice to implement the system call, so as to ensure memory isolation between the second task and the kernel.

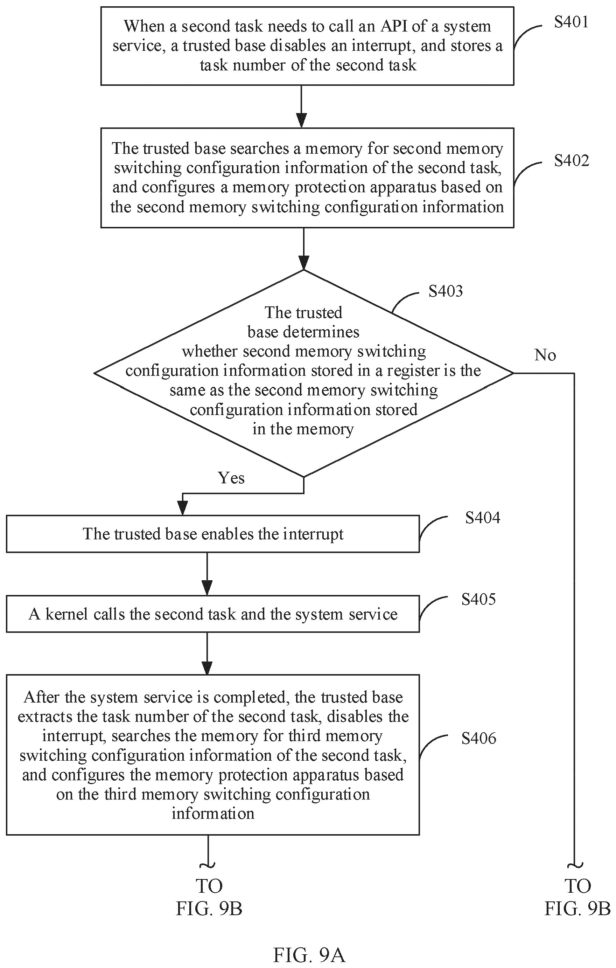

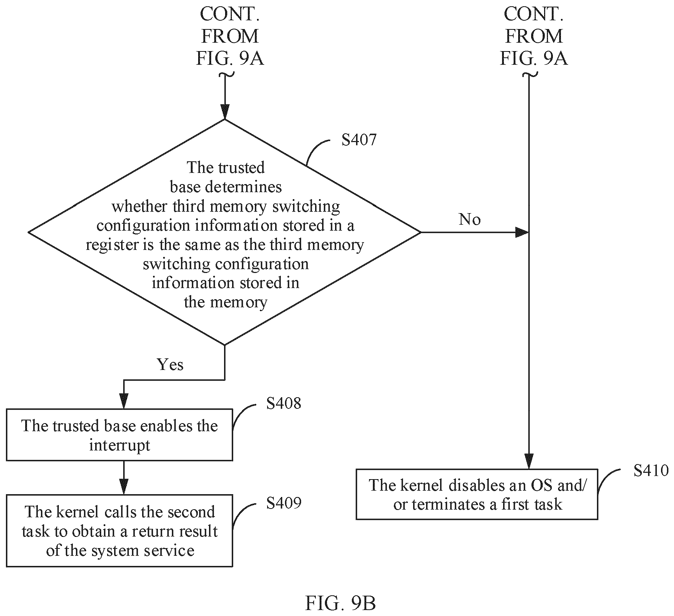

FIG. 9A and FIG. 9B are a flowchart of a kernel and task isolation method according to Embodiment 4 of this application. Based on Embodiment 3, in this embodiment, a trusted base needs to disable an interrupt before configuring a memory protection apparatus. After configuring the memory protection apparatus and before enabling the interrupt, the trusted base may further perform verification on validity of second memory switching configuration information and third memory switching configuration information. The trusted base enables the interrupt only when the second memory switching configuration information or the third memory switching configuration information is valid. This can prevent an interrupt, a JOP attack, or an ROP attack from modifying memory switching configuration information.

S401: When a second task needs to call an API of a system service, the trusted base disables an interrupt, and stores a task number of the second task.

S402: The trusted base searches a memory for second memory switching configuration information of the second task, and configures a memory protection apparatus based on the second memory switching configuration information.

The second memory switching configuration information includes memory protection apparatus configuration information of a kernel, that of the second task, and that of the trusted base. The trusted base first loads the memory protection apparatus configuration information of the kernel, that of the second task, and that of the trusted base from memories to general-purpose registers respectively. For example, the trusted base loads the memory protection apparatus configuration information of the kernel, that of the second task, and that of the trusted base to general-purpose registers r0, r1, and r2 respectively. Herein, r0=table[kernel], r1=table[task2 ID], and r2=table[PEKM], where "=" represents an assignment operation, table[kernel] represents the memory protection apparatus configuration information of the kernel that is stored in the memory, table[task2 ID] represents the memory protection apparatus configuration information of the second task that is stored in the memory, and [PEKM] represents the memory protection apparatus configuration information of the trusted base that is stored in the memory.

The trusted base reads the memory protection apparatus configuration information of the kernel, that of the second task, and that of the trusted base that are stored in the general-purpose registers r0, r1, and r2 to a register of the memory protection apparatus, where the register of the memory protection apparatus is a dedicated register. Then, the trusted base configures a protected region of the memory protection apparatus based on the memory protection apparatus configuration information of the kernel, that of the second task, and that of the trusted base that are stored in the register of the memory protection apparatus. The protected region of the memory protection apparatus may be configured in the following manner: region[0]=r0, region[1]=r1, and region[2]=r2, where region[0], region[1], and region[2] respectively represent protected regions of the memory protection apparatus, that is, access permission of memory space of the kernel, that of the first task, and that of the trusted base are set based on the configuration information in the general-purpose registers r0, r1, and r2. Memory boundary switching is completed by configuring the memory protection apparatus.

S403: The trusted base determines whether second memory switching configuration information stored in a register is the same as the second memory switching configuration information stored in the memory.

It may be understood that the second memory switching configuration information stored in the memory is read-only and cannot be tampered with, and the second memory switching configuration information stored in the general-purpose register may be tampered with by an interrupt, a JOP attack, or an ROP attack. Therefore, in this embodiment, before enabling the interrupt, the trusted base first determines whether the second memory switching configuration information stored in the memory is the same as the second memory switching configuration information stored in the general-purpose register. If yes, it indicates that the second memory switching configuration information in the general-purpose register is not tampered with, and the trusted base enables the interrupt. If no, it indicates that the second memory switching configuration information in the general-purpose register is tampered with, and the trusted base disables the OS or terminates the first task. This can prevent an interrupt or a control flow attack such as an ROP attack or a JOP attack from modifying the second memory switching configuration information.

When the second memory switching configuration information stored in the register is the same as the second memory switching configuration information stored in the memory, that is, when the second memory switching configuration information is valid, step S404 is performed. When the second memory switching configuration information stored in the register is different from the second memory switching configuration information stored in the memory, that is, when the second memory switching configuration is invalid, step S410 is performed. An implementation of determining whether the second memory switching configuration information is valid is the same as the implementation of determining whether the first memory switching configuration information is valid in Embodiment 1, and functions thereof are also the same. Details are not described herein again.

S404: The trusted base enables the interrupt.

S405: The kernel calls the second task and the system service.

S406: After the system service is completed, the trusted base extracts the task number of the second task, disables the interrupt, searches the memory for third memory switching configuration information of the second task, and configures the memory protection apparatus based on the third memory switching configuration information.

S407: The trusted base determines whether third memory switching configuration information stored in a register is the same as the third memory switching configuration information stored in the memory.

When the third memory switching configuration information stored in the register is the same as the third memory switching configuration information stored in the memory, that is, when the third memory switching configuration information is valid, step S408 is performed. When the third memory switching configuration information stored in the register is different from the third memory switching configuration information stored in the memory, that is, when the third memory switching configuration is invalid, step S410 is performed. An implementation of determining whether the third memory switching configuration information is valid is the same as the implementation of determining whether the first memory switching configuration information is valid in Embodiment 1, and functions thereof are also the same. Details are not described herein again.

S408: The trusted base enables the interrupt.

S409: The kernel calls the second task to obtain a return result of the system service.

S410: The kernel disables the OS and/or terminates the second task.

In this embodiment, the trusted base disables the interrupt before configuring the memory protection apparatus based on the memory switching configuration information (including the second memory switching configuration information and the third memory switching configuration information), and enables the interrupt after configuring the memory protection apparatus, so as to prevent the interrupt from modifying the memory switching configuration information in the register. In addition, before enabling the interrupt, the trusted base determines whether the memory switching configuration information stored in the memory is the same as the memory switching configuration information stored in the register, so as to prevent an attack such as an ROP attack or a JOP attack from modifying the memory switching configuration information in the register. This can prevent the memory access permission from being tampered with because the memory switching configuration information in the register is modified. When the memory access permission is tampered with, data in the memories of the task and the kernel may be leaked. Consequently, safety of the task and the kernel cannot be ensured in a system call process.

It may be understood that disabling the interrupt operation before the memory protection apparatus is configured, and performing post verification may be implemented through decoupling. That is, in a possible embodiment, the trusted base may disable the interrupt operation before configuring the memory protection apparatus, and enable the interrupt after configuring the memory protection apparatus. Before enabling the interrupt, the trusted base does not determine whether the memory switching configuration information stored in the memory is the same as the memory switching configuration information stored in the register. In another possible embodiment, the trusted base may not disable the interrupt operation before configuring the memory protection apparatus, and before calling the service, determine whether the memory switching configuration information stored in the memory is the same as the memory switching configuration information stored in the register.

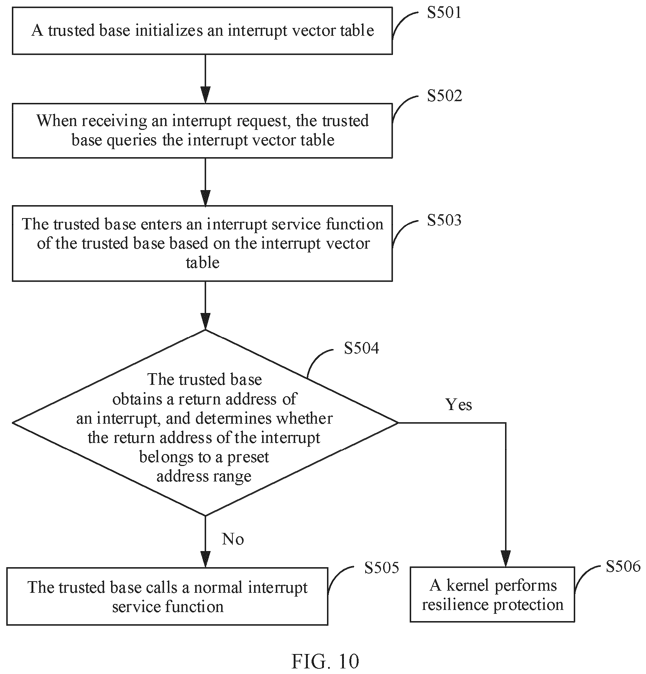

FIG. 10 is a flowchart of a kernel and task isolation method according to Embodiment 5 of this application. This embodiment may be performed based on Embodiment 2 or Embodiment 4. That is, after enabling an interrupt, a trusted base processes the interrupt according to the method in this embodiment, that is, performs post verification for the second time. As shown in FIG. 10, the method provided in this embodiment includes the following steps.

S501: The trusted base initializes an interrupt vector table.

The interrupt vector table is stored in a read-only segment of the trusted base, so as to avoid unauthorized modification of the interrupt vector table. Different from the conventional technology, in this embodiment of this application, the interrupt vector table includes a normal interrupt service function and an interrupt service function of the trusted base, and the interrupt service function of the trusted base is a newly added function. However, in the conventional technology, the interrupt vector table includes only the normal interrupt service function. In this embodiment of this application, when interrupt triggering occurs, the interrupt service function of the trusted base is preferentially called to perform validity verification, and after the verification succeeds, the normal interrupt service function is executed. Alternatively, it may be considered that a priority of the interrupt service function of the trusted base is higher than a priority of the normal interrupt service function.

In this embodiment of this application, the interrupt service function of the trusted base is set to perform validity verification for the second time, so as to improve safety. In most cases, an attack can be prevented by performing verification on validity of memory switching configuration information. However, if an attacker modifies the interrupt vector table and enters an interrupt after the trusted base configures an MPU or an MMU, post verification is bypassed. To cope with this case, the trusted base verifies whether the interrupt is a valid interrupt by using the interrupt service function of the trusted base.

S502: When receiving an interrupt request (Interrupt Request, IRQ), the trusted base queries the interrupt vector table.

After the interrupt is enabled, if the trusted base receives the IRQ, the interrupt vector table is queried.

S503: The trusted base enters the interrupt service function of the trusted base based on the interrupt vector table.

S504: The trusted base obtains a return address of the interrupt, and determines whether the return address of the interrupt belongs to a preset address range.

During normal execution, each time an instruction is executed, a PC register is updated. When an interrupt occurs, after a current instruction is executed, a corresponding interrupt handler function (that is, the normal interrupt service function) in the interrupt vector table is jumped to. Before the interrupt handler function is entered, a context is stored, and a current value of the PC register is assigned to the return address of the current interrupt.

An invalid interrupt means that the attacker attempts to enter a code fragment of the trusted base by jumping to the code fragment, and maliciously sends an interrupt to attempt to bypass post verification.

In this embodiment, a memory of the trusted base includes a data segment memory, a code segment memory, and a read-only segment memory. The preset address range may be an address range of the code segment memory of the trusted base. Because the trusted base has disabled the interrupt before configuring a memory protection apparatus, only malicious code generates an interrupt in the address range of the code segment memory of the trusted base.

Therefore, in this embodiment, it is determined, through post verification for the second time, whether the return address of the interrupt belongs to the preset address range. When the return address of the interrupt belongs to the preset address range, it is determined that the interrupt is an invalid interrupt. Alternatively, when the return address of the interrupt does not belong to the preset address range, it is determined that the interrupt is a valid interrupt. When the interrupt is a valid interrupt, step S505 is performed. When the interrupt is an invalid interrupt, step S506 is performed.

S505: The trusted base calls the normal interrupt service function.

S506: A kernel performs resilience protection.

The resilience protection may be a shutdown operation, shutdown of an operating system, or the like.

It may be understood that, in this embodiment, the normal interrupt service function and the interrupt service function of the trusted base may alternatively use other names. For example, the normal interrupt service function is referred to as a first interrupt service function, and the interrupt service function of the trusted base is referred to as a second interrupt service function.

In this embodiment, when the interrupt request is received, the interrupt vector table is queried, where the interrupt vector table includes the normal interrupt service function and the interrupt service function of the trusted base. The interrupt service function of the trusted base is entered based on the interrupt vector table. The return address of the interrupt is obtained, and it is determined whether the return address of the interrupt belongs to the preset address range. When the return address of the interrupt belongs to the preset address range, it is determined that the interrupt is an invalid interrupt, and resilience protection is performed. Alternatively, when the return address of the interrupt does not belong to the preset address range, it is determined that the interrupt is a valid interrupt, and the normal interrupt service function is called. By verifying whether the interrupt is a valid interrupt, safety of a system call or a task call is improved.

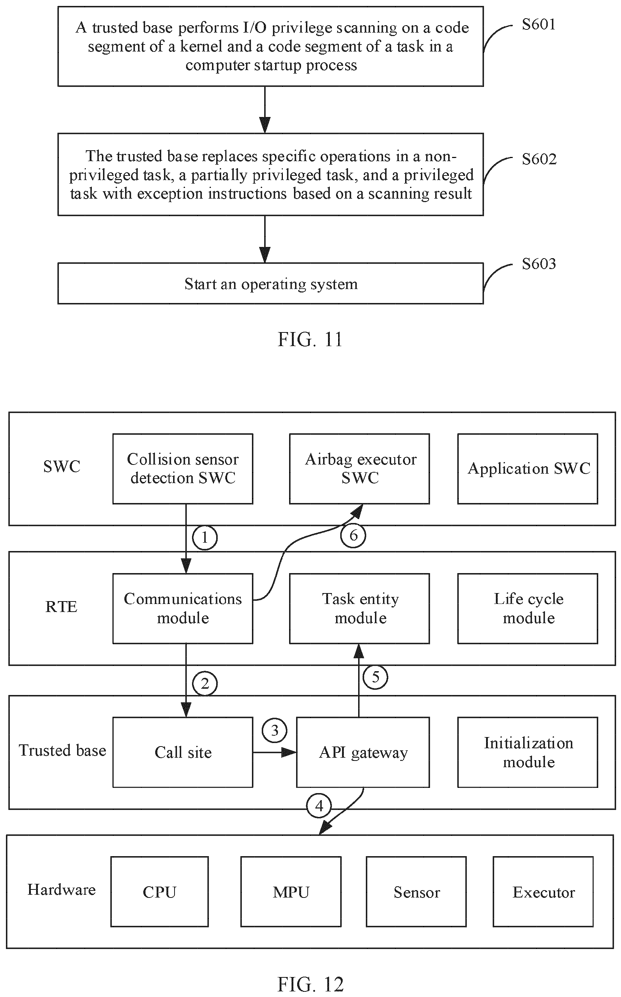

FIG. 11 is a flowchart of a kernel and task isolation method according to Embodiment 6 of this application. As shown in FIG. 11, the method provided in this embodiment includes the following steps:

S601: A trusted base performs I/O privilege scanning on a code segment of a kernel and a code segment of a task in a computer startup process.

In an existing system, different privilege modes determine different I/O access permission, and I/O access includes memory mapping I/O (Memory mapping I/O, MMIO) and a register. To ensure privilege isolation of I/O access, in a common task, a specific I/O register or specific I/O address space cannot be accessed. In this embodiment of this application, after the common task is placed at a privilege layer, I/O access permission still needs to be limited. Therefore, I/O privilege scanning is performed on the code segment of the kernel and the code segment of the task in a system startup process. The code segment of the kernel includes various register operation instructions and various I/O operation instructions, and the code segment of the task includes various I/O operation instructions.

I/O privilege scanning is to scan various operations in a non-privileged task, a partially privileged task, and a privileged task, to obtain specific operations in the non-privileged task, the partially privileged task, and the privileged task.

S602: The trusted base replaces the specific operations in the non-privileged task, the partially privileged task, and the privileged task with exception instructions based on a scanning result.

The specific operation in the non-privileged task includes an IRQ register operation instruction, an I/O status register query instruction, a serial port register operation, a timing register operation, a system register operation, and an MPU register operation. The specific operation in the partially privileged task includes a system register operation and an MPU register operation. The specific operation in the privileged task includes an MPU register operation.

In this embodiment, for access to a specific register, the specific operations in the non-privileged task, the partially privileged task, and the privileged task are replaced with the exception instructions. The exception instruction may be a trap (system exception), and a task corresponding to the replaced exception instruction does not access the specific register. Subsequently, when the task attempts to access the specific register without permission, an exception is triggered.

S603: Start an operating system.

It should be noted that, in another embodiment of this application, instruction elimination may be further performed on the specific operations in the non-privileged task, a partially privileged task, and the privileged task, and a task obtained after the instruction elimination does not access the specific register.

In Embodiment 7 of this application, an AUTOSAR airbag system is used as an example. In the airbag system, a collision sensor detects a collision event, and after performing data processing, generally notifies an airbag executor to complete a stress response within 10 ms. FIG. 12 is a schematic diagram of hardware and software architectures of a vehicle-mounted device to which an embodiment is applicable. As shown in FIG. 12, the vehicle-mounted device uses a layered architecture, including a hardware (hardware) layer, a trusted base, a runtime environment (Run-Time Environment, RTE) layer, and a software component (software component, SWC) layer.

The hardware layer includes a central processing unit (central processing unit, CPU), an MPU, a sensor (sensor), and an executor (executor). The sensor is configured to detect a collision event, and the executor is configured to control operations such as opening and closing of an airbag.

The trusted base includes a call site, an API gateway, and an initialization module.

The RTE layer includes a communications (communication) module, a task entity (task body) module, and a life cycle (life cycle) module.

The SWC layer includes a collision sensor detection SWC, an airbag executor SWC, and an application SWC.

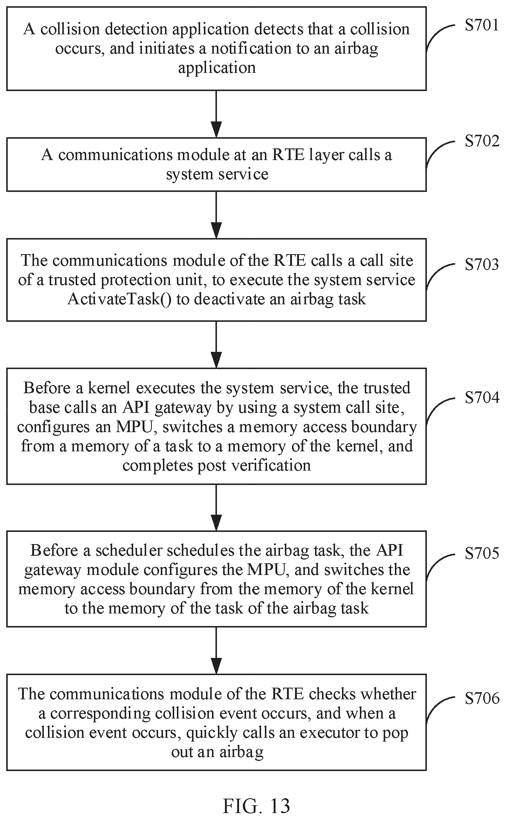

FIG. 13 is a schematic flowchart of feeding back collision detection by an airbag system. As shown in FIG. 13, the collision detection procedure includes the following steps.

S701: A collision detection application detects that a collision occurs, and initiates a notification to an airbag application.

The collision detection application determines, by analyzing input of a collision sensor, whether a collision occurs, and when determining that a collision occurs, needs to be open an airbag. However, because collision detection and airbag opening belong to different task entities, the airbag application needs to be notified through inter-task communication.

S702: A communications module at an RTE layer calls a system service.

An RTE provides a communications interface for a software module, and is further configured to: create a task entity, including an application software module, and control activation or termination of a task. Generally, the RTE uses a memory sharing method to implement inter-task communication. Therefore, a system service GetResource() or ReleaseResource() needs to be called to ensure data consistency, and a system service SetEvent(), WaitEvent(), or ActivateTask() also needs to be called to notify the task to receive data. That is, a plurality of system calls are performed for communication. For example, ActivateTask() is used to schedule the airbag to execute a task, and the RTE calls a call site of the system service.

S703: The communications module of the RTE calls a call site of a trusted base, to execute the system service ActivateTask() to deactivate an airbag task.

S704: Before a kernel executes the system service, the trusted base calls an API gateway by using a system call site, configures an MPU, switches a memory access boundary from a memory of the task to a memory of the kernel, and completes post verification.

S705: Before a scheduler schedules the airbag task, the API gateway module configures the MPU, and switches the memory access boundary from the memory of the kernel to the memory of the task of the airbag task.

S706: The communications module of the RTE checks whether a corresponding collision event occurs, and when a collision event occurs, quickly calls an executor to pop out the airbag.

The communications module of the RTE needs to call the corresponding system service to query a corresponding event GetEvent(), and check whether a corresponding collision event occurs through GetEvent().

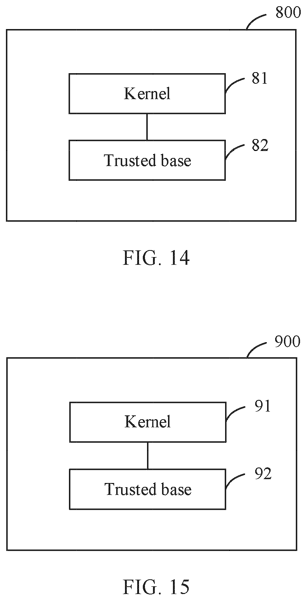

FIG. 14 is a schematic diagram of a structure of a computer system according to Embodiment 8 of this application. As shown in FIG. 14, the computer system 800 includes a kernel 81 and a trusted base 82. Both the kernel 81 and the trusted base 82 run on an OS of the computer system 800. One or more applications further run on the computer system, and each application calls one or more tasks.

The kernel 81 is configured to search a task preparation queue for a first task.

The trusted base 82 is configured to: search a memory for first memory switching configuration information of the first task, and configure a memory protection apparatus based on the first memory switching configuration information, where the memory protection apparatus is a hardware component configured to protect a memory of the computer system; and the first memory switching configuration information includes memory address information of the kernel and memory operation permission of the kernel, and memory address information of the first task and memory operation permission of the first task, operation permission of the first task for a memory of the kernel is no permission after the configuration, and operation permission of the kernel for a memory of the first task is readable after the configuration.

The kernel 81 is further configured to call the first task.

Optionally, the trusted base 81 is further configured to: before searching the memory for the first memory switching configuration information of the first task, disable an interrupt; and after configuring the memory protection apparatus based on the first memory switching configuration information, enable the interrupt.

Optionally, the trusted base 81 is further configured to: determine whether first memory switching configuration information stored in a register is the same as the first memory switching configuration information stored in the memory; and if the first memory switching configuration information stored in the register is the same as the first memory switching configuration information stored in the memory, determine that the first memory switching configuration information is valid. The kernel 82 is further configured to: when the first memory switching configuration information is valid, call the first task.

Optionally, the trusted base 81 is further configured to: if the first memory switching configuration information stored in the register is different from the first memory switching configuration information stored in the memory, determine that the first memory switching configuration information is invalid.

The kernel is further configured to: when the first memory switching configuration information is invalid, disable the OS and/or terminate the first task.

Optionally, the OS and all applications on the computer system are located at a privilege layer.

Optionally, after the trusted base 81 enables the interrupt, the trusted base is further configured to: when receiving an interrupt request, query an interrupt vector table, where the interrupt vector table includes a normal interrupt service function and an interrupt service function of the trusted base; enter the interrupt service function of the trusted base based on the interrupt vector table; obtain a return address of the interrupt, and determine whether the return address of the interrupt belongs to a preset address range; and when the return address of the interrupt belongs to the preset address range, determine that the current interrupt is an invalid interrupt, and perform resilience protection; or when the return address of the interrupt does not belong to the preset address range, determine that the current interrupt is a valid interrupt, and call the normal interrupt service function.

Optionally, the trusted base 81 is further configured to initialize the interrupt vector table, where the interrupt vector table is stored in a read-only segment of the trusted base.

Optionally, the trusted base 81 is further configured to: perform input/output I/O privilege scanning on a code segment of the kernel and a code segment of a task in a startup process of the computer system; replace specific operations in a non-privileged task, a partially privileged task, and a privileged task with exception instructions based on a scanning result; and start the OS.

Optionally, the specific operation in the non-privileged task includes an IRQ register operation instruction, an I/O status register query instruction, a serial port register operation, a timing register operation, a system register operation, and a memory protection apparatus register operation. The specific operation in the partially privileged task includes a system register operation and a memory protection apparatus register operation. The specific operation in the privileged task includes a memory protection apparatus register operation.

The computer system in this embodiment may be configured to perform the method described in any one of the foregoing method embodiments 1, 2, 5, and 6. Specific implementations and technical effects are similar, and details are not described herein again.

FIG. 15 is a schematic diagram of a structure of a computer system according to Embodiment 9 of this application. As shown in FIG. 15, the computer system 900 includes a kernel 91 and a trusted base 92. Both the kernel 91 and the trusted base 92 run on an OS of the computer system 800. One or more applications further run on the computer system, and each application calls one or more tasks.

The trusted base 91 is configured to store a task number of a second task when the second task needs to call an application programming interface API of a system service.

The trusted base 91 is further configured to: search a memory for second memory switching configuration information of the second task, and configure a memory protection apparatus based on the second memory switching configuration information, where the memory protection apparatus is a hardware component configured to protect a memory of the computer system; and the second memory switching configuration information includes memory address information of the kernel and memory operation permission of the kernel, and memory address information of the second task and memory operation permission of the second task, operation permission of the kernel for a memory of the second task is no permission after the configuration, and operation permission of the second task for a memory of the kernel is readable after the configuration.

The kernel 92 is configured to call the second task and the system service.

The trusted base 91 is further configured to: after the system service is completed, extract the task number of the second task, and switch a memory access boundary from the memory of the kernel to the memory of the second task.

The kernel 92 is further configured to call the second task to obtain a return result of the system service.

Optionally, the trusted base 91 is further configured to: before searching the memory for the second memory switching configuration information corresponding to the second task, disable an interrupt; and after configuring the memory protection apparatus based on the second memory switching configuration information, enable the interrupt.

Optionally, the trusted base 91 is further configured to: determine whether second memory switching configuration information stored in a register is the same as the second memory switching configuration information stored in the memory; and if the second memory switching configuration information stored in the register is the same as the second memory switching configuration information stored in the memory, determine that the second memory switching configuration information is valid. The kernel is further configured to: when the second memory switching configuration information is valid, call the second task.

Optionally, the trusted base 91 is further configured to: if the second memory switching configuration information stored in the register is different from the second memory switching configuration information stored in the memory, determine that the second memory switching configuration information is invalid. The kernel 92 is further configured to: when the second memory switching configuration information is invalid, disable the OS and/or terminate the second task.

Optionally, the switching, by the trusted base 91, a memory access boundary from the memory of the kernel to the memory of the second task includes: searching the memory for third memory switching configuration information of the second task, and configuring the memory protection apparatus based on the third memory switching configuration information, where the third memory switching configuration information includes memory address information of the kernel and memory operation permission of the kernel, and memory address information of the second task and memory operation permission of the second task, operation permission of the second task for a memory of the kernel is no permission after the configuration, and operation permission of the kernel for a memory of the second task is readable after the configuration.

Optionally, the trusted base 91 is further configured to: before searching the memory for the third memory switching configuration information of the second task, disable an interrupt; and after configuring the memory protection apparatus based on the third memory switching configuration information, enable the interrupt.

Optionally, the trusted base 91 is further configured to: determine whether third memory switching configuration information stored in a register is the same as the third memory switching configuration information stored in the memory; and if the third memory switching configuration information stored in the register is the same as the third memory switching configuration information stored in the memory, determine that the third memory switching configuration information is valid. The kernel 92 is further configured to: when the third memory switching configuration information is valid, call the second task to obtain the return result of the system service.

Optionally, the trusted base 91 is further configured to: if the third memory switching configuration information stored in the register is different from the third memory switching configuration information stored in the memory, determine that the third memory switching configuration information is invalid. The kernel 92 is further configured to: when the third memory switching configuration information is invalid, disable the OS and/or terminate the second task.

Optionally, the OS and all applications on the computer system are located at a privilege layer.

Optionally, after enabling the interrupt, the trusted base 91 is further configured to:
when receiving an interrupt request, query an interrupt vector table, where the interrupt vector table includes a normal interrupt service function and an interrupt service function of the trusted base;
enter the interrupt service function of the trusted base based on the interrupt vector table;
obtain a return address of the interrupt, and determine whether the return address of the interrupt belongs to a preset address range; and
when the return address of the interrupt belongs to the preset address range, determine that the interrupt is an invalid interrupt, and perform resilience protection; or
when the return address of the interrupt does not belong to the preset address range, determine that the interrupt is a valid interrupt, and call the normal interrupt service function.

Optionally, the trusted base 91 is further configured to initialize the interrupt vector table, where the interrupt vector table is stored in a read-only segment of the trusted base.

Optionally, the trusted base 91 is further configured to: perform I/O privilege scanning on a code segment of the OS and a code segment of a task in a startup process of the computer system; replace specific operations in a non-privileged task, a partially privileged task, and a privileged task with exception instructions based on a scanning result; and start the OS.

Optionally, the specific operation in the non-privileged task includes an IRQ register operation instruction, an I/O status register query instruction, a serial port register operation, a timing register operation, a system register operation, and a memory protection apparatus register operation. The specific operation in the partially privileged task includes a system register operation and a memory protection apparatus register operation. The specific operation in the privileged task includes a memory protection apparatus register operation.

The computer system in this embodiment may be configured to perform the method described in any one of the foregoing method embodiments 3 to 6. Specific implementations and technical effects are similar, and details are not described herein again.

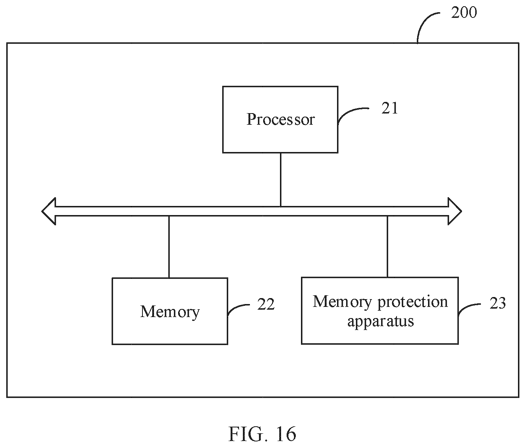

FIG. 16 is a schematic diagram of a structure of a computer system according to Embodiment 10 of this application. As shown in FIG. 16, the computer system 200 includes a processor 21, a memory 22, and a memory protection apparatus 23. The memory 22 includes a memory, an operating system OS and an application run on the processor 21, a kernel runs on the OS, the application includes one or more tasks, a trusted base further runs on the OS, the memory 22 is configured to store instructions, and the processor 21 is configured to execute the instructions stored in the memory 22, so that the processor 21 performs the method in any one of the foregoing method embodiments 1 to 7. Specific implementations and technical effects are similar, and details are not described herein again.

In the several embodiments provided in this application, it should be understood that the disclosed apparatus and method may be implemented in other manners. For example, the foregoing apparatus embodiments are merely examples. For example, division into the units is merely logical function division, and there may be another division manner during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The foregoing software functional unit is stored in a storage medium and includes several instructions for instructing a computer device (which may be a personal computer, a server, or a network device) or a processor to perform some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A kernel and task isolation method, wherein the method is applied to a self-driving system, an operating system OS and an application run on the self-driving system, a kernel runs on the OS, the application comprises one or more tasks, a trusted base further runs on the OS, wherein the OS and all applications on the computer system are located at a privilege layer, and the method comprises:
searching, by the kernel, a task preparation queue for a first task;
searching, by the trusted base, a memory for first memory switching configuration information of the first task, and configuring a memory protection apparatus based on the first memory switching configuration information, wherein the memory protection apparatus is a hardware component configured to protect a memory of the computer system; and the first memory switching configuration information comprises memory address information of the kernel and memory operation permission of the kernel, and memory address information of the first task and memory operation permission of the first task, operation permission of the first task for a memory of the kernel is no permission after the configuration, and operation permission of the kernel for a memory of the first task is readable after the configuration; and
calling, by the kernel, the first task.

2. The method according to claim 1, wherein before the searching, by the trusted base, a memory for first memory switching configuration information of the first task, the method further comprises:
disabling, by the trusted base, an interrupt; and
after the configuring, by the trusted base, a memory protection apparatus based on the first memory switching configuration information, the method further comprises:
enabling, by the trusted base, the interrupt.

3. The method according to claim 1, wherein before the calling, by the kernel, the first task, the method further comprises:
determining, by the trusted base, whether first memory switching configuration information stored in a register is the same as the first memory switching configuration information stored in the memory;
if the first memory switching configuration information stored in the register is the same as the first memory switching configuration information stored in the memory, determining that the first memory switching configuration information is valid; and
when the first memory switching configuration information is valid, calling, by the kernel, the first task.

4. The method according to claim 3, further comprising:
if the first memory switching configuration information stored in the register is different from the first memory switching configuration information stored in the memory, determining, by the trusted base, that the first memory switching configuration information is invalid; and
when the first memory switching configuration information is invalid, disabling, by the kernel, the OS and/or terminating the first task.

5. The method according to claim 2, wherein after the enabling, by the trusted base, the interrupt, the method further comprises:
when receiving an interrupt request, querying, by the trusted base, an interrupt vector table, wherein the interrupt vector table comprises a normal interrupt service function and an interrupt service function of the trusted base;
entering, by the trusted base, the interrupt service function of the trusted base based on the interrupt vector table;
obtaining, by the trusted base, a return address of the interrupt, and determining whether the return address of the interrupt belongs to a preset address range; and
when the return address of the interrupt belongs to the preset address range, determining, by the trusted base, that the current interrupt is an invalid interrupt, and performing resilience protection; or
when the return address of the interrupt does not belong to the preset address range, determining, by the trusted base, that the current interrupt is a valid interrupt, and calling the normal interrupt service function.

6. The method according to claim 5, further comprising:
initializing, by the trusted base, the interrupt vector table, wherein the interrupt vector table is stored in a read-only segment of the trusted base.

7. The method according to any one of claims 1 to 6, further comprising:
performing, by the trusted base, input/output I/O privilege scanning on a code segment of the kernel and a code segment of a task in a startup process of the computer system;
replacing, by the trusted base, specific operations in a non-privileged task, a partially privileged task, and a privileged task with exception instructions based on a scanning result; and
starting, by the trusted base, the OS.

8. The method according to claim 7, wherein the specific operation in the non-privileged task comprises an IRQ register operation instruction, an I/O status register query instruction, a serial port register operation, a timing register operation, a system register operation, and a memory protection apparatus register operation;
the specific operation in the partially privileged task comprises a system register operation and a memory protection apparatus register operation; and
the specific operation in the privileged task comprises a memory protection apparatus register operation.

9. A kernel and task isolation method, wherein the method is applied to a self-driving system, an operating system OS and an application run on the self-driving system, a kernel runs on the OS, the application comprises one or more tasks, a trusted base further runs on the OS, wherein the OS and all applications on the computer system are located at a privilege layer, and the method comprises:
storing, by the trusted base, a task number of a second task when the second task needs to call an application programming interface API of a system service;
searching, by the trusted base, a memory for second memory switching configuration information of the second task, and configuring a memory protection apparatus based on the second memory switching configuration information, wherein the memory protection apparatus is a hardware component configured to protect a memory of the computer system; and the second memory switching configuration information comprises memory address information of the kernel and memory operation permission of the kernel, and memory address information of the second task and memory operation permission of the second task, operation permission of the kernel for a memory of the second task is no permission after the configuration, and operation permission of the second task for a memory of the kernel is readable after the configuration;
calling, by the kernel, the second task;
calling, by the kernel, the system service;
after the system service is completed, extracting, by the trusted base, the task number of the second task, and switching a memory access boundary from the memory of the kernel to the memory of the second task; and
calling, by the kernel, the second task to obtain a return result of the system service.

10. The method according to claim 9, wherein before the searching, by the trusted base, a memory for second memory switching configuration information corresponding to the second task, the method further comprises:
disabling, by the trusted base, an interrupt; and
after the configuring, by the trusted base, a memory protection apparatus based on the second memory switching configuration information, the method further comprises:
enabling, by the trusted base, the interrupt.

11. The method according to claim 9, wherein before the calling, by the kernel, the second task, the method further comprises:
determining, by the trusted base, whether second memory switching configuration information stored in a register is the same as the second memory switching configuration information stored in the memory;
if the second memory switching configuration information stored in the register is the same as the second memory switching configuration information stored in the memory, determining, by the trusted base, that the second memory switching configuration information is valid; and
when the second memory switching configuration information is valid, calling, by the kernel, the second task.

12. The method according to claim 11, further comprising:
if the second memory switching configuration information stored in the register is different from the second memory switching configuration information stored in the memory, determining, by the trusted base, that the second memory switching configuration information is invalid; and
when the second memory switching configuration information is invalid, disabling, by the kernel, the OS and/or terminating the second task.

13. A self-driving system, comprising a processor, a memory, and a memory protection apparatus, wherein the memory comprises a memory, an operating system OS and an application run on the processor, a kernel runs on the OS, the application comprises one or more tasks, a trusted base further runs on the OS, the OS and all applications on the computer system are located at a privilege layer, the memory is configured to store instructions, and the processor is configured to execute the instructions stored in the memory, so that the processor performs the method according to any one of claims 1 to 8.
